# EUROPÄISCHE PATENTSCHRIFT

(11) **EP 3 537 654 B1**
(45) Veröffentlichungstag und Bekanntmachung des Hinweises auf die Patenterteilung: **16.12.2020**
(21) Anmeldenummer: 19161491.6
(22) Anmeldetag: 08.03.2019
(51) Int. Cl.: H04L 12/12

(54) **VERFAHREN UND SYSTEM ZUM ERMITTELN EINER KONFIGURATION EINER SCHNITTSTELLE**
METHOD AND SYSTEM FOR DETERMINING A CONFIGURATION OF AN INTERFACE
PROCÉDÉ ET SYSTÈME DE DÉTERMINATION D'UNE CONFIGURATION D'UNE INTERFACE

(30) Priorität: 09.03.2018 DE 102018105495
(43) Veröffentlichungstag der Anmeldung: 11.09.2019
(73) Patentinhaber: EWE TEL GmbH, 26133 Oldenburg (DE)
(72) Erfinder: RULOFFS, Frank-Winfried, 28844 Weyhe (DE)
(74) Vertreter: Jabbusch, Matthias

(56) Entgegenhaltungen:
- EP-A1- 2 455 838
- EP-A1- 2 654 365
- DE-A1- 19 853 451
- GB-A- 2 471 883

## Beschreibung

Die Erfindung betrifft ein Verfahren zum Ermitteln einer Konfiguration einer Schnittstelle nach dem Oberbegriff des Patentanspruches 1 und ein Verfahren zum Ermitteln und Verändern der Konfiguration dieser Schnittstelle, welches das Verfahren zum Ermitteln einer Konfiguration der Schnittstelle beinhaltet, nach dem Patentanspruch 13. Weiter betrifft die Erfindung ein System zum Ermitteln einer Konfiguration einer Schnittstelle nach dem Patentanspruch 19 und ein System zum Ermitteln und Verändern einer Konfiguration einer Schnittstelle nach dem Patentanspruch 20.

Die Schnittstelle ist Bestandteil einer Netzwerkkomponente in einem Netzwerk und dem Ermittelnden, also beispielsweise einem Techniker vor Ort, nicht notwendigerweise bekannt. Wenn netzwerkfähige Geräte wie Rechner, Drucker oder Kopierer, die in Local Area Netzwerken angeordnet sind oder angeordnet werden sollen, beispielsweise nach einem räumlichen Umzug über vor Ort vorhandene Netzwerkdosen der Gebäudeverkabelung angeschlossen werden sollen, ist es notwendig, die Schnittstellen von Netzwerkkomponenten, welche über diese Schnittstellen entweder mit jeweils einem Netzwerkdosenanschluss einer Netzwerkdose oder jeweils direkt mit einem Patchkabel verbunden sind, entsprechend zu konfigurieren. Dafür muss der Ermittelnde oder der Techniker zunächst einmal wissen, welche Schnittstelle in welcher Netzwerkkomponente zu dem Netzwerkdosenanschluss gehört, an den das Gerät angeschlossen werden soll. Manchmal ist dies in einem geeigneten Dokumentationssystem hinterlegt oder als sogenannte Interface-Description auf der Schnittstelle der Netzwerkkomponente eingetragen. In vielen Fällen liegt hierfür jedoch keine korrekte Dokumentation vor.

Sowohl zum Erstellen einer derartigen Dokumentation als auch für die Konfiguration der Schnittstelle, wenn keine oder eine fehlerhafte Dokumentation vorliegt, muss der Techniker vor Ort daher ermitteln, welche Netzwerkdose, insbesondere welcher Netzwerkdosenanschluss, zu welcher Schnittstelle auf welcher Netzwerkkomponente gehört. Herkömmlicherweise liest der Techniker vor Ort eine Dosenbezeichnung ab und dokumentiert die Dosenbezeichnung. Nachfolgend begibt sich der Techniker in einen Technikraum, in welchem die Netzwerkkomponente mit der zu konfigurierenden Schnittstelle angeordnet ist, und ermittelt, insbesondere auf einem Patchpanel, den mit der Netzwerkdose verbundenen Netzwerkdosenanschluss mittels einer zur dokumentierten Dosenbezeichnung korrespondierenden Patchportbeschriftung. Nachfolgend muss herkömmlicherweise ein den Netzwerkdosenanschluss im Technikraum mit der gesuchten Schnittstelle verbindendes Patchkabel vom Netzwerkdosenanschluss zur Schnittstelle zurückverfolgt werden, um die gesuchte Schnittstelle ausfindig zu machen. Diese Aufgabe erfordert besonders viel Zeit, da in vielen Anwendungsfällen mehrere Patchkabel gemeinsam in massiven Kabelsträngen zusammengeführt sind und eine Nachverfolgung daher oft nur mit zwei Technikern möglich ist, die an jeweils einem Ende des Patchkabels ziehen. Wenn die Schnittstelle nachfolgend konfiguriert werden soll, wendet sich der Techniker vor Ort herkömmlicherweise mit dem Wunsch einer Konfigurierung oder Provisionierung dieser Schnittstelle an einen Netzwerkadministrator. Der Netzwerkadministrator greift daraufhin mit seinen Zugriffsrechten auf die Netzwerkkomponente zu und konfiguriert die Schnittstelle der Netzwerkkomponente wunschgemäß.

Zusammenfassend ist sowohl das herkömmliche Auslesen und damit das Dokumentieren von Schnittstellen als auch das herkömmliche Konfigurieren von Schnittstellen mit hohem Aufwand verbunden, insbesondere mit hohem Personalaufwand, da der Techniker vor Ort im Wechsel einen Raum mit der Netzwerkdose und den Technikraum aufsuchen und im Technikraum aufwendig und gegebenenfalls unter Hinzuziehung eines zweiten Technikers Kabel rückverfolgen muss und für ein eventuelles Konfigurieren der Schnittstelle zusätzlich ein Administrator mit Zugriff auf die Netzwerkkomponente beteiligt werden muss.

Aus GB 2471883A ist ein Client-Server-System bekannt, bei welchem eine Softwareanwendung von einem Client-Server für ein Client-Gerät, wie einem Fernsehgerät bereitgestellt wird und bei welchem ein Mobilgerät wie ein Smartphone mit dem Client-Server in Kontakt steht und die Softwareanwendung kontrolliert. Ausgehend vom Client-Server werden hierfür Geräteinformationen an das Mobilgerät gesendet. Das Mobilgerät registriert sich dabei für das Client-Gerät. Das Client-Gerät ist als so genanntes Thin-Gerät ausgebildet. Die Rechenleistung für die Softwareanwendung wird von dem als Thin-Client-Server ausgebildeten Client-Server bereitgestellt.

Der Erfindung liegt die Aufgabe zugrunde, den Aufwand, insbesondere Personalaufwand, für das Ermitteln der Konfiguration von Schnittstellen, die Bestandteil von Netzwerkkomponenten in einem Netzwerk sind, sowie insbesondere auch für das Konfigurieren oder Dokumentieren von Schnittstellen zu verringern.

Die Erfindung löst diese Aufgabe mit einem Verfahren zum Ermitteln einer Konfiguration einer Schnittstelle nach dem Patentanspruch 1, mit einem Verfahren zum Ermitteln und Verändern der Konfiguration dieser Schnittstelle nach dem Patentanspruch 13 sowie mit einem System zum Ermitteln einer Konfiguration einer Schnittstelle nach dem Patentanspruch 19 und mit einem System zum Ermitteln und Verändern einer Konfiguration einer Schnittstelle nach dem Patentanspruch 20.

Erfindungsgemäß ist ein Verfahren zum Ermitteln einer Konfiguration einer Schnittstelle nach dem Patentanspruch 1 vorgesehen.

Die Netzwerkkomponente mit der zu konfigurierenden Schnittstelle ist insbesondere ein Router oder ein Switch oder ein anderes System im Netzwerk. Die Schnittstelle ist ein Systemport der Netzwerkkomponente. Ein Techniker stellt vor Ort die Datenverbindung zwischen dem Vermittler und der Schnittstelle insbesondere über einen Netzwerkdosenanschluss oder Dosenport einer Netzwerkdose her, indem er beispielsweise den Vermittler mittels eines Netzwerkkabels oder Patchkabels an den Netzwerkdosenanschluss anschließt, welcher mit der Schnittstelle verbunden ist. Die Schnittstelle ist dem Techniker daher nicht notwendigerweise bekannt. Das erfindungsgemäße Verfahren ermöglicht es jedoch, dem Techniker die Schnittstelle bekannt zu machen.

Alternativ stellt der Techniker die Datenverbindung zwischen dem Vermittler und der Schnittstelle insbesondere über ein Patchkabel her, welches direkt an die Schnittstelle oder einen Dosenanschluss angeschlossen wird, etwa indem er den Vermittler mittels eines Netzwerkkabels an eine an das Patchkabel angeschlossene Kupplung anschließt. Die Kupplung stellt dabei den Dosenanschluss oder Dosenport bereit. Die Lokalisationsinformationen zur Identifikation der Schnittstelle werden bei hergestellter Datenverbindung automatisch vom Vermittler ausgelesen und entweder unverändert oder nach einer Verarbeitung in anderer Form über das Kommunikationsnetz und die Kommunikationszentrale an den Aktivierungsserver übermittelt. Der Vermittler greift ausschließlich lesend auf die Schnittstelle der Netzwerkkomponente zu. Jeglicher Datenfluss für einen späteren Administrationszugriff auf die Schnittstelle, insbesondere für eine eventuelle spätere Konfiguration der Schnittstelle, erfolgt dann über den Aktivierungsserver zur Schnittstelle.

Nach Identifizierung der Netzwerkkomponente und der Schnittstelle werden ebenfalls automatisch mit Hilfe der Lokalisationsinformationen die Konfigurationsinformationen der identifizierten Netzwerkkomponente für die identifizierte Schnittstelle ausgelesen und entweder unverändert oder nach Verarbeitung in anderer Form über das Kommunikationsnetz an den Vermittler und weiter an das Endgerät übermittelt. Die Konfigurationsinformationen werden vorzugsweise in Form einer optischen Anzeige, insbesondere auf einem Display des Endgerätes, am Endgerät bereitgestellt. Der Techniker vor Ort bekommt somit die aktuelle Konfiguration der Schnittstelle angezeigt und kann die Konfigurationsinformationen nachfolgend dokumentieren oder bei Bedarf ausgehend von den Konfigurationsinformationen die Schnittstelle neu konfigurieren. Für die Dokumentation der Schnittstelle werden die Konfigurationsinformationen bei einer Weiterbildung der Erfindung automatisch oder manuell, insbesondere als sogenannte Interface-Description, auf der Schnittstelle der Netzwerkkomponente eingetragen.

Jede Netzwerkkomponente im Netzwerk ist vorzugsweise derart eingerichtet, dass jede Schnittstelle jeder Netzwerkkomponente im Netzwerk in Erwiderung auf das Herstellen einer Datenverbindung zwischen einer Kommunikationseinrichtung und der jeweiligen Schnittstelle selbsttätig Lokalisationsinformationen über die Datenverbindung an die Kommunikationseinrichtung sendet. Die Lokalisationsinformationen werden vorzugsweise lokal in einem Zwischenspeicher des Vermittlers zwischengespeichert.

Der Vermittler wird alternativ auch als Remote System Activator bezeichnet und ist baulich separat vom Endgerät ausgebildet. Insbesondere ist der Vermittler ein Router mit einer an die Erfindung angepassten Software. Auf dem Vermittler oder Remote System Activator läuft eine Remote System Activator Server Proxy Software. Für die Verbindung des Vermittlers zum Kommunikationsnetz weist der Vermittler bevorzugt ein integriertes Mobilfunkmodem, insbesondere LTE-Modem, oder einen Anschluss, insbesondere USB-Anschluss, für ein externes Mobilfunkmodem, insbesondere einen Mobilfunk-Stick, auf.

Das baulich separat vom Vermittler ausgebildete Endgerät ist insbesondere ein Client und ist insbesondere ein Tablet, ein Notebook oder ein Smartphone oder ein anderes elektronisches Gerät, welches mit dem Vermittler zur Ausgabe von Informationen am Endgerät und zur Eingabe von Informationen am Endgerät verbunden werden kann. Dabei ist vorgesehen, dass der Vermittler mittels einer Funkverbindung, insbesondere über eine WLAN-Verbindung und über eine WLAN-Schnittstelle des Vermittlers, mit dem Endgerät in Kontakt steht. Der Vermittler ist dabei insbesondere ein mobiler und batteriebetriebener Router. Das Endgerät ist dabei ein mobiles Endgerät, insbesondere ein Tablet oder Smartphone.

Der Vermittler kann über das Kommunikationsnetz kommunizieren, über die Datenverbindung die zu konfigurierende Schnittstelle auslesen und steht mit dem Endgerät in Kontakt. Die Datenverbindung zwischen dem Vermittler und der zu konfigurierenden Schnittstelle wird über eine Ethernet-Schnittstelle des Vermittlers hergestellt. Über die Datenverbindung liest der Vermittler Nachrichten aus, die jede Schnittstelle selbsttätig aussendet. Das hierfür verwendete Protokoll ist insbesondere das sogenannte Link Layer Discovery Protocol (LLDP) oder das Cisco Discovery Protocol (CDP) oder das sogenannte Foundry Discover Protocol (FDP) oder ein anderes Protokoll. Weiter ist bevorzugt vorgesehen, dass in Abhängigkeit von den Konfigurationsinformationen Ausgaben, insbesondere auf einem Display, am Endgerät erzeugt werden sowie Eingaben am Endgerät, insbesondere am Display, entgegengenommen werden.

Die Verbindung zwischen dem Vermittler und dem Endgerät ist vorzugsweise verschlüsselt. Das zur Übertragung verwendete Protokoll ist insbesondere HTTPS. Eine weitere Verschlüsselung der Kommunikation zwischen dem Vermittler und dem Endgerät ist daher vorzugsweise nicht vorgesehen.

Wenn das Endgerät mit einer Anfrage via HTTPS auf den Vermittler zugreift, dann zeigt der Vermittler die mittels eines der oben genannten Protokolle (z.B. LLDP oder CDP) ausgelesenen Informationen direkt an. Zudem agiert der Vermittler als Proxy, der die Anfrage an die Kommunikationszentrale weiterleitet und hierfür die LLDP- oder CDP-Information oder Informationen eines anderen verwendeten Protokolls von der Schnittstelle in den HTTP-Header einfügt. Die Kommunikationszentrale generiert eine Antwort auf die Abfrage. Für das Endgerät scheint es, als würde die Anfrage von einem Webserver am Vermittler beantwortet.

Der Aktivierungsserver greift bevorzugt mit auf dem Aktivierungsserver hinterlegtem Nutzernamen und Passwort auf die jeweilige Netzwerkkomponente, welche die identifizierte und zu konfigurierende Schnittstelle beinhaltet, zu. Dies erfolgt insbesondere auch auf Basis der bereitgestellten Lokalisationsinformationen, welche es dem Aktivierungsserver ermöglichen, gezielt auf die richtige Netzwerkkomponente mit der identifizierten Schnittstelle zuzugreifen. Dank des hinterlegten Nutzernamens und des hinterlegten Passworts ist eine automatische Legitimation ohne manuelle Eingabe von Passwörtern möglich.

Gemäß einer vorteilhaften Ausführungsform der Erfindung wird das Kommunikationsnetz zumindest teilweise durch das öffentliche Internet bereitgestellt. Dadurch ergeben sich Vorteile der Erreichbarkeit der Kommunikationszentrale und des Aktivierungsservers durch den Vermittler, auch wenn der Aktivierungsserver und/oder die Kommunikationszentrale, wie bevorzugt vorgesehen, an einem anderen Ort als die Kommunikationseinrichtung mit Zugriff auf die zu konfigurierende Schnittstelle angeordnet ist.

Die Kommunikation zwischen der Kommunikationszentrale und dem Vermittler erfolgt über eine Mobilfunkschnittstelle des Vermittlers und zumindest teilweise über ein Mobilfunknetz. Das Kommunikationsnetz wird dabei zumindest teilweise durch das Mobilfunknetz bereitgestellt. Das Auslesen der Schnittstelle kann somit auch in Räumen vorgenommen werden, in welchen außer mittels Netzwerkdosen mit Verbindung zu der zu konfigurierenden Schnittstelle keine weitere Möglichkeit besteht, kabelgebunden das öffentliche Internet und damit die bevorzugt an einem anderen Ort angeordnete Kommunikationszentrale zu erreichen.

Weiter bevorzugt ist vorgesehen, dass sämtliche Kommunikation über das Kommunikationsnetz mittels verschlüsselter Kommunikationsverbindungen erfolgt. Dadurch ist eine Sicherheit gegen unbefugtes Abgreifen oder Manipulieren von Daten im Kommunikationsnetz gegeben.

Der Aktivierungsserver wird alternativ als System Activation Server bezeichnet und ist insbesondere ein LAN- (Local Area Network) Activation Server. Auf dem System Activation Server läuft eine System Activation Server Servlet Software.

Die gemäß einer besonders bevorzugten Ausführungsform der Erfindung im Kommunikationsnetz angeordnete Kommunikationszentrale wird alternativ als System Activation Hub bezeichnet wird. Die Kommunikationszentrale ist dabei bevorzugt im öffentlichen Internet angeordnet und ist dadurch auf vielfältige Weise erreichbar.

Die Kommunikation zwischen dem Vermittler und der Kommunikationszentrale erfolgt über eine Kommunikationsverbindung im Kommunikationsnetz. Die Kommunikationszentrale und der Aktivierungsserver sind bevorzugt funktional und räumlich voneinander getrennte Geräte und zum Datenaustausch über das Kommunikationsnetz mittels einer weiteren Kommunikationsverbindung miteinander verbunden. Dabei wird die weitere Kommunikationsverbindung zwischen Aktivierungsserver und Kommunikationszentrale bevorzugt über ein privates Kommunikationsnetz bereitgestellt, um ein hohes Sicherheitsniveau zu erreichen. Alternativ wird die weitere Kommunikationsverbindung zwischen Aktivierungsserver und Kommunikationszentrale über das öffentliche Internet bereitgestellt.

Durch die Trennung von Kommunikationszentrale und Aktivierungsserver ist ein hohes Maß an Sicherheit erreicht, da ein Zugriff von der Kommunikationszentrale auf die Netzwerkkomponente mit der Schnittstelle immer über den Aktivierungsserver erfolgen muss und daher selbst in dem Fall, dass unbefugt auf die Kommunikationszentrale zugegriffen werden sollte, ein unautorisierter Zugriff auf die Netzwerkkomponenten nicht möglich ist. Zudem kann aufgrund der räumlichen Trennung von Kommunikationszentrale und Vermittler und insbesondere bei Anordnung der Kommunikationszentrale im öffentlichen Internet, vorteilhaft vom Vermittler über die gemeinsame Kommunikationszentrale auf mehrere Aktivierungsserver zugegriffen werden. Bei alternativen Ausführungsformen sind jedoch die Kommunikationszentrale und der Aktivierungsserver, insbesondere in Form von Servlets, baulich in einem Gerät zusammengefasst.

Bei einer vorteilhaften Ausführungsform der Erfindung stellt die Kommunikationszentrale eine Benutzeroberfläche für die Eingaben am Endgerät bereit. Die Benutzeroberfläche ist vorzugsweise eine HTML-basierte grafische Benutzeroberfläche, insbesondere Web-GUI. Eine Proxy-Funktion des Vermittlers ermöglicht dabei einen Zugriff des Endgerätes über den Vermittler auf die durch die Kommunikationszentrale bereitgestellte Benutzeroberfläche. Dadurch können gegebenenfalls Anpassungen der Benutzeroberfläche zentral an der Kommunikationszentrale erfolgen.

Vorteilhafterweise nimmt das Endgerät Nutzerdaten aus einer Eingabe am Endgerät entgegen und übermittelt die Nutzerdaten mittels einer Proxy-Funktion des Vermittlers über den Vermittler an die Kommunikationszentrale. Weiter ist hierbei vorgesehen, dass die Kommunikationszentrale mittels der Nutzerdaten prüft, ob der Nutzer, also insbesondere der Techniker vor Ort, authentisch ist, und den Nutzer nach erfolgreicher Prüfung autorisiert. Die Kommunikationszentrale gewährt nur dem autorisierten Nutzer das Ermitteln und Verändern der Konfiguration der Schnittstelle.

Vorzugsweise werden am Endgerät mittels der Benutzeroberfläche am Endgerät Dokumentationsinformationen für die Schnittstelle abgefragt und über den Vermittler und weiter über das Kommunikationsnetz an die Kommunikationszentrale übermittelt. Verfahrensgemäß ist hierbei insbesondere vorgesehen, dass das Endgerät Dokumentationsinformationen für die Schnittstelle aus einer Eingabe am Endgerät entgegennimmt und dass die Lokalisationsinformationen mit diesen am Endgerät entgegengenommenen Dokumentationsinformationen ergänzt werden. Dabei weisen diese am Endgerät entgegengenommenen Dokumentationsinformationen insbesondere Informationen über Auftragsnummer, Gebäude, Etage, Raum und Dosenbezeichnung einer Netzwerkdose, mit welcher die Schnittstelle, insbesondere mittels Hausverkabelung, verbunden ist, oder einzelne dieser Informationen auf.

Die Lokalisationsinformationen mit den Dokumentationsinformationen und die Nutzerdaten werden vorzugsweise zusammen in einem HTTP-Request, insbesondere HTTP-Request-Header vom Vermittler über das Kommunikationsnetz an die Kommunikationszentrale übermittelt. Die Kommunikationszentrale erhält somit mehrere Informationen in einer einzigen Anfrage wodurch der Datenverkehr im Kommunikationsnetz gering gehalten wird.

Die über das Netzwerk übertragenen Lokalisationsinformationen können auch Einstellungen sein, welche einer nicht eingerichteten Schnittstelle zugeordnet sind, oder fehlende Einstellungen dieser nicht eingerichteten Schnittstelle sein. Die Konfigurationsinformationen sowie insbesondere auch Konfigurationswünsche für eventuelle Schnittstellenkonfigurationen enthalten vorzugsweise Parameter, welche eine Identifikationskennung der Netzwerkkomponente, insbesondere Seriennummer oder IP-Adresse, und die Lokalisationsinformation über die Schnittstelle im Netzwerk aufweisen.

Die Kommunikation zwischen dem Vermittler und der Kommunikationszentrale über das Kommunikationsnetz erfolgt bevorzugt verschlüsselt. Dabei ist insbesondere vorgesehen, dass der Vermittler seine Kommunikation mit der Kommunikationszentrale mit einem privaten Schlüssel, der am Vermittler hinterlegt ist, verschlüsselt und dass die Kommunikationszentrale mittels eines öffentlichen Schlüssels prüft, ob der Vermittler authentisch ist und den Vermittler nach erfolgreicher Authentisierung an der Kommunikationszentrale autorisiert. Der Vermittler und die Kommunikationszentrale kommunizieren dabei insbesondere via HTTPS-Request Header in dem LLDP- oder CDP-Informationen kodiert sind und via Verschlüsselung mittels Signierung miteinander.

Auf der Kommunikationszentrale läuft vorzugsweise eine System Activation Hub Servlet Software, welche Port-Management, Bestandsdatenverwaltung und unter Verwendung von Port-Management und Bestandsdatenverwaltung Identifikationsverfahren des zur Netzwerkkomponente gehörenden Aktivierungsservers betreibt. Die Kommunikationszentrale weist vorzugsweise eine Datenbank auf. In der Datenbank verwaltet die Kommunikationszentrale bevorzugt Aktivierungsserver, Vermittler, Nutzer und/oder Vorlagen für eine Konfiguration, insbesondere Provisionierung, von Schnittstellen von Netzwerkkomponenten.

Bei einer besonders bevorzugten Ausführungsform der Erfindung ist vorgesehen, dass die Kommunikationszentrale in der Datenbank der Kommunikationszentrale mehrere Nutzer und mehrere Vermittler verwaltet und dass die Kommunikationszentrale in Erwiderung auf vom Vermittler erhaltene Lokalisationsinformationen bei erfolgreicher Autorisierung des Vermittlers und erfolgreicher Autorisierung des Nutzers auf Basis der Lokalisationsinformationen den Aktivierungsserver sucht, über den die Netzwerkkomponente, welcher die Lokalisationsinformationen zugeordnet sind, erreichbar ist, und in Erwiderung darauf vom gesuchten Aktivierungsserver Konfigurationsinformationen erhält und an den mobilen Vermittler zurück übermittelt.

Weiter ist bevorzugt vorgesehen, dass die Kommunikationszentrale die vom Aktivierungsserver erhaltenen Konfigurationsinformationen kodiert und in der Bereitstellung einer Benutzeroberfläche, insbesondere Web-GUI, in einer Antwort, insbesondere in einem HTTPS-Response, an den mobilen Vermittler zurück übermittelt und weiter über dessen Proxy-Funktion an das Endgerät, insbesondere an einen Browser des Endgerätes, übermittelt und dass das Endgerät eine Ausgabe mit den Konfigurationsinformationen erzeugt. Die aktuelle Konfiguration der Schnittstelle kann somit vom Techniker vor Ort am Endgerät abgelesen werden.

Bei Ausführungsformen der Erfindung, bei denen mehrere Aktivierungsserver im Kommunikationsnetz vorgesehen sind, ist insbesondere vorgesehen, dass die Kommunikationszentrale mit allen ihr bekannten Aktivierungsservern im Kommunikationsnetz, insbesondere über die weiteren Kommunikationsverbindungen, kommuniziert und diese Aktivierungsserver in der Datenbank der Kommunikationszentrale verwaltet.

Bevorzugt durchsucht die Kommunikationszentale alle ihr bekannten Aktivierungsserver, zu welchen sie Verbindungen aufrecht erhält wiederholt nach Netzwerkkomponenten, von denen Lokalisationsinformationen mittels einer Kommunikationseinrichtung abgefragt werden. Dabei stellt die Kommunikationszentrale Anfragen an alle ihr bekannten Aktivierungsserver im Netz und nimmt deren Antworten entgegen. Die Kommunikationszentrale kann daher Lokalisationsinformationen, die sie von der mobilen Kommunikationseinrichtung erhält, sofort zur Identifikation der zugehörigen Netzwerkkomponente verwenden und gezielt die Konfigurationseinstellungen hierzu abfragen oder gemäß einem Konfigurationswunsch die betreffende Schnittstelle der Netzwerkkomponente konfigurieren.

Gemäß einer vorteilhaften Ausführung von der Erfindung ist vorgesehen, dass die Kommunikationszentrale den Aktivierungsserver, über den die Netzwerkkomponente erreichbar ist, auf Basis der Lokalisationsinformationen, die der gesuchten Netzwerkkomponente zugeordnet sind, sucht, indem die Kommunikationszentrale zusammen mit den Lokalisationsinformationen einen Befehl zum Suchen von Netzwerkkomponenten an alle ihr bekannten Aktivierungsserver im Netz stellt, dass der gesuchte Aktivierungsserver auf Basis der Lokalisationsinformationen erkennt, dass die den Lokalisationsinformationen zugeordnete Netzwerkkomponente durch ihn erreichbar ist und in Erwiderung darauf mit einem Administrationszugriff auf die Netzwerkkomponente zugreift und Konfigurationsinformationen, insbesondere aufweisend den Typ und die Softwareversion einer Software auf der Netzwerkkomponente, von dieser Netzwerkkomponente abfragt und die Konfigurationsinformationen an die Kommunikationszentrale zurück übermittelt.

Auf das Suchen der Netzwerkkomponente folgt vorzugsweise die Abfrage von spezifischen Konfigurationsinformationen der Schnittstelle. Hierzu ist vorteilhafterweise vorgesehen, dass die Kommunikationszentrale anhand der von der Netzwerkkomponente abgefragten Konfigurationsinformationen eine Vorlage, insbesondere ein Template, auswählt und einen Befehl zur Abfrage von spezifischen Konfigurationsinformationen zusammen mit der Vorlage an den Aktivierungsserver, über den die Netzwerkkomponente erreichbar ist, übermittelt und dass der Aktivierungsserver in Erwiderung darauf mit einem Administrationszugriff auf die Netzwerkkomponente zugreift und spezifische Konfigurationsinformationen zur Schnittstelle von dieser Netzwerkkomponente abfragt und an die Kommunikationszentrale zurück übermittelt. Die spezifischen Konfigurationsinformationen weisen insbesondere eine Hardwarekennung der Schnittstelle und weitere schnittstellenspezifische Informationen, wie z.B. VLAN-Zugehörigkeit und Duplex- und Speedeinstellungen auf.

Für den Administrationszugriff auf die Netzwerkkomponente muss der Aktivierungsserver die Berechtigung aufweisen und diese der Netzwerkkomponente bekannt geben. Hierfür ist gemäß einer vorteilhaften Ausführungsform der Erfindung vorgesehen, dass der Aktivierungsserver für die Legitimation des Administrationszugriffs auf die Netzwerkkomponente einen am Aktivierungsserver hinterlegten Nutzernamen und ein dem Nutzernamen zugeordnetes und am Aktivierungsserver hinterlegtes Passwort an die Netzwerkkomponente übermittelt. Weiter ist hierbei vorgesehen, dass die Netzwerkkomponente im Fall erfolgreicher Legitimation dem Aktivierungsserver den Administrationszugriff auf die den Lokalisationsinformationen zugeordnete Netzwerkkomponente gewährt.

Es ist vorteilhaft, wenn die Kennung für die Hardware und die Kennung für die Software sowie die IP-Adresse und die Schnittstellenbezeichnung der Schnittstelle für eine jeweilige Netzwerkkomponente nicht immer wieder von der Kommunikationszentrale abgefragt werden müssen. Vorzugsweise ist daher vorgesehen, dass die Kommunikationszentrale Konfigurationsinformationen zu ihr bekannten Netzwerkkomponenten in einem Zwischenspeicher speichert, die Konfigurationsinformationen weisen dabei bevorzugt einzelne, mehrere oder alle der folgenden Informationen auf: Mandant, IP-Adresse, Hardware-Kennung, Software-Kennung, Beschreibung.

Gemäß einer vorteilhaften Weiterbildung der Ausführungsform mit dem Zwischenspeicher wird auch der Zeitpunkt, zu welchem die Netzwerkkomponente mit den zugehörigen Konfigurationsinformationen in den Zwischenspeicher aufgenommen wird, in diesem Zwischenspeicher gespeichert und wird die Netzwerkkomponente mit den zugehörigen Konfigurationsinformationen nach einer definierten Zeitdauer aus dem Zwischenspeicher gelöscht. Die definierte Zeitdauer ist vorzugsweise konfigurierbar und beträgt beispielsweise zwischen zehn Minuten und zwei Stunden, insbesondere 15 Minuten. Dadurch werden die Informationen lange genug im Zwischenspeicher gehalten, um viele unnötige Zugriffe auf den Aktivierungsserver zu vermeiden. Zugleich wird der Zwischenspeicher jeweils nach der definierten Zeitdauer immer wieder um die mit dieser definierten Zeitdauer gespeicherten Informationen bereinigt.

Besonders bevorzugt ist eine verschlüsselte Kommunikation vom Aktivierungsserver zur Kommunikationszentrale vorgesehen, insbesondere wenn das Kommunikationsnetz das öffentliche Internet nutzt. Die Verbindung von der Kommunikationszentrale zum Aktivierungsserver erfolgt daher vorteilhafterweise unter Verwendung einer verschlüsselten Kommunikationsverbindung beispielsweise unter Nutzung von SSL oder TLS für die Verschlüsselung. Im Detail wird für jeden Aktivierungsserver ein öffentlicher und ein privater Schlüssel in der Kommunikationszentrale erzeugt. Der öffentliche Schlüssel wird in der Kommunikationszentrale gespeichert. Der private Schlüssel wird einmalig dem Aktivierungsserver bereitgestellt und nachfolgend in der Kommunikationszentrale gelöscht. Dadurch wird sichergestellt, dass auch bei einem eventuellen unbefugten Zugriff auf die Kommunikationszentrale kein Zugriff auf den privaten Schlüssel möglich ist.

Bevorzugt ist daher vorgesehen, dass sich der Aktivierungsserver mit dem privaten Schlüssel, der am Aktivierungsserver hinterlegt ist, an der Kommunikationszentrale autorisiert und dass die Kommunikationszentrale nach erfolgreicher Autorisierung eine Verbindung zwischen dem Aktivierungsserver und der Kommunikationszentrale freigibt. Die Verbindung zwischen dem Aktivierungsserver und der Kommunikationszentrale muss also mit dem sicher am Aktivierungsserver gespeicherten privaten Schlüssel aufgebaut werden. Weiter ist bevorzugt vorgesehen, dass die Kommunikationszentrale nachfolgend versucht, diese Verbindung zwischen dem Aktivierungsserver und der Kommunikationszentrale aufrecht zu erhalten.

Insbesondere fragt die Kommunikationszentrale fortlaufend immer wieder ab, zu welchen Aktivierungsservern Verbindungen hergestellt sind, und hält hergestellte Verbindungen aufrecht. Hergestellte Verbindungen werden vorzugsweise dadurch aufrecht erhalten, dass über alle Verbindungen von der Kommunikationszentrale zu den Aktivierungsservern in einem Intervall von beispielsweise 30 Sekunden wiederholt ein ECHO-Paket gesendet wird, das von den Aktivierungsservern beantwortet wird. Für den Fall, dass die Verbindung dennoch abbricht, ist vorzugsweise vorgesehen, dass der Aktivierungsserver in Erwiderung auf einen Verlust der Verbindung zur Kommunikationszentrale zyklisch versucht, die Verbindung wieder herzustellen, insbesondere so lange versucht, die Verbindung wieder herzustellen, bis die Verbindung tatsächlich wieder hergestellt ist.

Der Aktivierungsserver wird vorzugsweise dadurch an der Kommunikationszentrale autorisiert, dass die Kommunikationszentrale einen Zufallswert an den Aktivierungsserver sendet, dass nachfolgend der Aktivierungsserver den Zufallswert mit dem privaten Schlüssel verschlüsselt und im Ergebnis eine Signatur erhält, nachfolgend der Aktivierungsserver seine Seriennummer zusammen mit der Signatur an die Kommunikationszentrale übermittelt und nachfolgend die Kommunikationszentrale die Signatur entschlüsselt und daraufhin den Aktivierungsserver autorisiert, insbesondere den Aktivierungsserver durch Vergleich der entschlüsselten Signatur mit dem ursprünglich generierten Zufallswert authentifiziert und daraufhin autorisiert.

Bei einem Verfahren zum Ermitteln und Verändern der Konfiguration einer Schnittstelle, die über ein Netzwerk mit einem Netzwerkdosenanschluss datenübertragend verbunden ist und die Bestandteil einer Netzwerkkomponente in diesem Netzwerk ist, ist erfindungsgemäß vorgesehen, dass die Konfiguration der Schnittstelle mit dem vorstehend beschriebenen Verfahren zum Ermitteln der Konfiguration einer Schnittstelle gemäß einer möglichen Ausführungsbeispiel ermittelt wird und dass das Endgerät eine Konfigurationsanfrage für eine zu konfigurierende Schnittstelle über den Vermittler und das Kommunikationsnetz an die kommunikationszentrale übermittelt, dass die Kommunikationszentrale einen Konfigurationswunsch für die gewünschte Konfiguration der Schnittstelle am Endgerät abfragt, dass das Endgerät den Konfigurationswunsch über den Vermittler, das Kommunikationsnetz und die Kommunikationszentrale an den Aktivierungsserver übermittelt und dass der Aktivierungsserver die Schnittstelle an der Netzwerkkomponente gemäß dem Konfigurationswunsch konfiguriert.

Die Konfiguration der Schnittstelle kann gemäß Eingaben am Endgerät verändert werden. Aus den Eingaben am Endgerät wird zunächst der Konfigurationswunsch generiert, der über das Kommunikationsnetz und die Kombinationszentrale dem Aktivierungsserver bereitgestellt wird. Der Aktivierungsserver konfiguriert die zu konfigurierende Schnittstelle gemäß dem in einem Befehl zur Konfiguration der Schnittstelle erhaltenen Konfigurationswunsch. Das Konfigurieren der Schnittstelle ist dabei insbesondere eine Provisionierung der Schnittstelle.

Zum Konfigurieren der Schnittstelle mittels des erfindungsgemäßen Verfahrens sind somit lediglich der Techniker vor Ort und das verfahrensgemäß verwendete System notwendig. Der Administrator für die Netzwerkkomponente wird zum Konfigurieren der Schnittstelle nicht benötigt. Die manuelle Abstimmung zwischen dem Techniker vor Ort und dem Administrator, die nach dem Stand der Technik in der Regel telefonisch erfolgt, entfällt. Mit nur wenigen Schritten kann der Techniker vor Ort die Schnittstelle konfigurieren. Verglichen mit dem Stand der Technik ergibt sich dadurch eine Zeitersparnis, weniger Personalaufwand, da der Administrator nicht hinzugezogen werden muss, und damit insgesamt eine Kostenersparnis.

Bei einer bevorzugten Ausführung vom Erfindung ist vorgesehen, dass eine bereitgestellte Benutzeroberfläche, insbesondere eine Web-GUI, an einem Browser auf dem Endgerät die Konfigurationsanfrage entgegennimmt und, insbesondere in einem HTTPS-Request, an den Vermittler übermittelt und dass eine Proxy-Funktion des Vermittlers die Konfigurationsanfrage an die Kommunikationszentrale weiterleitet.

Nachdem die Kommunikationszentrale weiß, dass eine neue Konfiguration der Schnittstelle gewünscht ist, muss sie zunächst in Erfahrung bringen, wie die Schnittstelle konfiguriert werden soll. Dies ist nicht nur abhängig von der speziellen Netzwerkkomponente mit der Schnittstelle, sondern hängt vor allem auch davon ab, welches Gerät über die Netzwerkdose mit der Schnittstelle verbunden werden soll, also beispielsweise ein Computer oder ein Drucker.

Hierfür ist weiter bevorzugt vorgesehen, dass die Kommunikationszentrale den Konfigurationswunsch am Endgerät dadurch abfragt, dass die Kommunikationszentrale eine Benutzeroberfläche, insbesondere Web-GUI, zur Abfrage des Konfigurationswunsches erzeugt und über die Proxy-Funktion des Vermittlers die Benutzeroberfläche auf dem Endgerät bereitstellt. Dies hat insbesondere den Vorteil, dass Änderungen eine Abfrage zentral an der Kommunikationszentrale erfolgen können, also nicht die Software oder App auf jedem Endgerät geändert werden muss.

Vorzugsweise stellt die Kommunikationszentrale in Erwiderung auf eine Konfigurationsanfrage eine Vorlage zur Abfrage des Konfigurationswunsches für die Schnittstelle bereit. Die Vorlage, auch Template genannt, ist in der Datenbank der Kommunikationszentrale gespeichert und wird insbesondere in Abhängigkeit von der Netzwerkkomponente selbst und den Konfigurationseinstellungen der Netzwerkkomponente für die zu konfigurierende Schnittstelle ausgewählt. Die Kommunikationszentrale fragt daraufhin den Konfigurationswunsch auf Basis dieser Vorlage ab.

Die Kommunikationszentrale verwaltet vorzugsweise in der Datenbank der Kommunikationszentrale mehrere Nutzer und mehrere Vermittler. Gemäß einer vorteilhaften Ausführungsform der Erfindung ist vorgesehen, dass die Kommunikationszentrale in Erwiderung auf einen von einem Nutzer an einen Vermittler erhaltenen Konfigurationswunsch prüft, ob der Nutzer und der Vermittler für einen dem Konfigurationswunsch zugeordneten Administrationszugriff auf die Netzwerkkomponente autorisiert sind, dass die Kommunikationszentrale genau in dem Fall, dass der Nutzer und der Vermittler für diesen Administrationszugriff autorisiert sind, den Konfigurationswunsch an den zuständigen Aktivierungsserver weiterleitet und dass der Aktivierungsserver in Erwiderung auf den weitergeleiteten Konfigurationswunsch den zugeordneten Administrationszugriff auf die Netzwerkkomponente vornimmt, wobei der Aktivierungsserver mittels des Administrationszugriffs die Konfigurationseinstellungen der mit dem Vermittler verbundenen Netzwerkkomponente verändert.

In der Datenbank werden auch die Aktivierungsserver, Nutzerdaten von Nutzern mit administrativen Rechten für das Konfigurieren der Netzwerkkomponente und Vorlagen für Konfigurationswünsche verwaltet. Zu den Nutzerdaten von Nutzern mit administrativen Rechten gehört dabei gegebenenfalls eine dem Nutzer zugeordnete Berechtigungsstufe oder dem Nutzer für ein bestimmtes Projekt zugewiesene Berechtigungsstufe. Insbesondere werden in der Kommunikationszentrale mehrere Subsysteme mit jeweils mehreren im jeweiligen Subsystem angelegten Projekten für mehrere Kunden mit jeweils in der Kommunikationszentrale gespeicherten Daten organisiert. Die in der Kommunikationszentrale gespeicherten Daten sind dabei insbesondere in der Datenbank gespeichert.

Weiter ist bevorzugt vorgesehen, dass die Kommunikationseinrichtung, insbesondere der Vermittler, sich mit dem privaten Schlüssel an der Kommunikationszentrale autorisiert und die Kommunikationszentrale in Erwiderung darauf der Kommunikationseinrichtung erlaubt, Daten mittels HTTPS-Protokoll zwischen ihnen auszutauschen. Über die mittels HTTPS von der Kommunikationszentrale auf den Vermittler zur Verfügung gestellte Benutzeroberfläche, insbesondere Web-GUI, kann ein autorisierter Nutzer Abfragen indizieren und einen Konfigurationswunsch für die spezifische Schnittstelle zugehörig zu einer spezifischen Netzwerkkomponente senden. Die Kommunikationszentrale nimmt diese Anforderung entgegen und übermittelt diese in Form von Befehlen in einem speziellen Protokoll an den Aktivierungsserver und dabei insbesondere auf ein auf dem Aktivierungsserver laufendes Aktivierungsserver-Servlet. Das Aktivierungsserver-Servlet führt daraufhin spezifische Administrationszugriffe auf die Netzwerkkomponente aus.

Von der Kommunikationszentrale kann somit gesteuert werden, von welcher Kommunikationseinrichtung Zugriff auf welche Netzwerkkomponente gewährt wird. Für den zu autorisierenden Nutzer, insbesondere Techniker vor Ort, ist in der Kommunikationszentrale oder auf einer externen Einrichtung, insbesondere auf einem RADIUS Server, ein Nutzername und ein dazugehöriges Passwort hinterlegt, womit der Nutzer durch Eingabe an der Kommunikationseinrichtung autorisiert werden kann, über die Benutzeroberfläche, insbesondere Web-GUI, ein Auslesen von Informationen oder eine Konfiguration vorzunehmen. Bevorzugt wird ein Nutzer für eine vorbestimmte Zeitdauer von beispielsweise 30 Minuten gesperrt, wenn für diesen Nutzer fünfmal in Folge ein Passwort eingegeben wurde, welches von dem gespeicherten Passwort für diesen Nutzer abweicht, was die Kommunikationszentrale durch entsprechenden Vergleich ermittelt.

Jedem Nutzer, der ausgehend von der Kommunikationseinrichtung einen Administrationszugriff auf eine Netzwerkkomponente ersucht, ist dabei bevorzugt jeweils eine Berechtigungsstufe von drei möglichen Berechtigungsstufen für den Administrationszugriff zugeordnet. Jedem Nutzer in der Datenbank ist dabei entweder eine erste Berechtigungsstufe oder eine zweite Berechtigungsstufe oder eine dritte Berechtigungsstufe für den Administrationszugriff zugeordnet, dabei ist vorgesehen, dass gemäß der ersten Berechtigungsstufe nur das Konfigurieren von Schnittstellen erlaubt wird, dass gemäß der zweiten Berechtigungsstufe wird zusätzlich das Verwalten von Daten bei nur einem Mandanten erlaubt wird und dass gemäß einer dritten Berechtigungsstufe zusätzlich das Verwalten von Daten bei allen Mandanten erlaubt wird.

Die Kommunikationszentrale verwaltet vorteilhafterweise in der Datenbank der Kommunikationszentrale Vorlagen mit Konfigurationseinstellungen für Netzwerkkomponenten. Insbesondere wird die Vorlage in Abhängigkeit von den Lokalisationsinformationen zur Identifikation der Schnittstelle, alternativ oder zusätzlich in Abhängigkeit von Konfigurationsinformationen der Schnittstelle und/oder der Netzwerkkomponente oder in Abhängigkeit von anderen Daten, die zur jeweiligen Schnittstelle gespeichert sind und alternativ oder zusätzlich in Abhängigkeit von Daten, die für eine bereits eingegebene Nutzung der Schnittstelle, beispielsweise für die Verbindung mit einem Drucker oder Kopierer, gespeichert sind, bereit gestellt.

Vorteilhafterweise ist weiter vorgesehen, dass die Kommunikationszentrale in einem Zwischenspeicher die Konfigurationsinformationen zwischenspeichert, dass die Kommunikationszentrale in Erwiderung auf einen vom Vermittler erhaltenen Konfigurationswunsch eine Vorlage in Abhängigkeit vom Konfigurationswunsch auswählt und mit Parametern, die jeweils dem Konfigurationswunsch zugeordnet sind, und Parametern, die den zwischengespeicherten Konfigurationseinstellungen zugeordnet sind, befüllt und dass die Kommunikationszentrale den Konfigurationswunsch dadurch weiter an den Aktivierungsserver übermittelt, dass der Aktivierungsserver einen Befehl zum Neubeschreiben der Schnittstelle mit der Vorlage an den Aktivierungsserver übermittelt.

Der Aktivierungsserver beschreibt die Schnittstelle, insbesondere mit den in der Vorlage mit dem Befehl zum Neubeschreiben der Schnittstelle enthaltenen Parametern. Insbesondere ist vorgesehen, dass der Aktivierungsserver die Schnittstelle dadurch konfiguriert, dass der Aktivierungsserver einen Administrationszugriff über eine verschlüsselte Verbindung, insbesondere über eine mittels SSH verschlüsselte Verbindung, auf die Netzwerkkomponente zugreift und ein aus der Vorlage abgeleitetes und für die Netzwerkkomponente erzeugtes Skript zur Neukonfiguration der Schnittstelle auf der Netzwerkkomponente ausführt.

Vorzugsweise übermittelt der Aktivierungsserver nach dem Konfigurieren der Schnittstelle ein Ergebnis der Konfiguration über das Kommunikationsnetz an die Kommunikationszentrale zurück. Die Kommunikationszentrale protokolliert optional das Ergebnis der Konfiguration. Optional protokoliert alternativ oder zusätzlich der Aktivierungsserver das Ergebnis der Konfiguration. Vorzugsweise übermittelt nachfolgend die Kommunikationszentrale das Ergebnis der Konfiguration, insbesondere in einer modifizierten grafischen Benutzeroberfläche, insbesondere Web-GUI, über eine Proxyfunktion des Vermittlers an das Endgerät. Der Techniker vor Ort erhält daher sofort das Ergebnis der Konfiguration.

Das System zum Ermitteln einer Konfiguration einer Schnittstelle, die Bestandteil einer Netzwerkkomponente in einem Netzwerk ist, und auch das System zum Ermitteln und Verändern einer Konfiguration einer Schnittstelle umfasst jeweils Mittel zur Ausführung des erfindungsgemäßen Verfahrens zum Ermitteln einer Konfiguration einer Schnittstelle. Insbesondere umfasst das jeweilige System die den Vermittler, das Endgerät, die Kommunikationszentrale und den Aktivierungsserver sowie Softwareprodukte, die auf dem Vermittler, dem Endgerät, der Kommunikationszentrale und dem Aktivierungsserver laufen und erfindungsgemäß programmiert oder angepasst sind, um das jeweilige erfindungsgemäße Verfahren auszuführen. Das System zum Ermitteln und Verändern der Konfiguration der Schnittstelle umfasst zusätzlich entsprechende Mittel zur Ausführung des Verfahrens zum Ermitteln und Verändern der Konfiguration der Schnittstelle.

Weitere Ausführungsformen ergeben sich aus den Patentansprüchen, aus der Zeichnung und aus der nachfolgenden Beschreibung eines in der Zeichnung dargestellten Ausführungsbeispiels der Erfindung. In der Zeichnung zeigen:
- Fig. 1:: ein Netzwerk mit einer Netzwerkkomponente, die eine Schnittstelle aufweist, und mit einer mit der Schnittstelle verbundenen Netzwerkdose und ein System zum Ermitteln und Verändern einer Konfiguration der Schnittstelle gemäß einem ersten Ausführungsbeispiel der Erfindung;
- Fig. 2:: ein Netzwerk mit einer Netzwerkkomponente, die eine Schnittstelle aufweist, und mit einer mit der Schnittstelle verbundenen Netzwerkdose und ein System zum Ermitteln und Verändern einer Konfiguration der Schnittstelle gemäß einem zweiten Ausführungsbeispiel der Erfindung;
- Fig. 3:: ein gegenüber dem Netzwerk von Fig. 1 erweitertes Netzwerk und ein gegenüber dem System von Fig. 1 erweitertes System gemäß einem dritten Ausführungsbeispiel der Erfindung;
- Fig. 4:: ein Ablaufdiagramm mit Schritten eines Verfahrens zum Ermitteln einer Konfiguration einer Schnittstelle gemäß einem Ausführungsbeispiel der Erfindung;
- Fig. 5:: ein Ablaufdiagramm zum zyklischen Auslesen von Lokalisationsinformationen einer Schnittstelle gemäß einem Ausführungsbeispiel der Erfindung; und
- Fig. 6:: ein Ablaufdiagramm mit Schritten eines Verfahrens zum Ermitteln und Verändern einer Konfiguration einer Schnittstelle gemäß einem Ausführungsbeispiel der Erfindung.

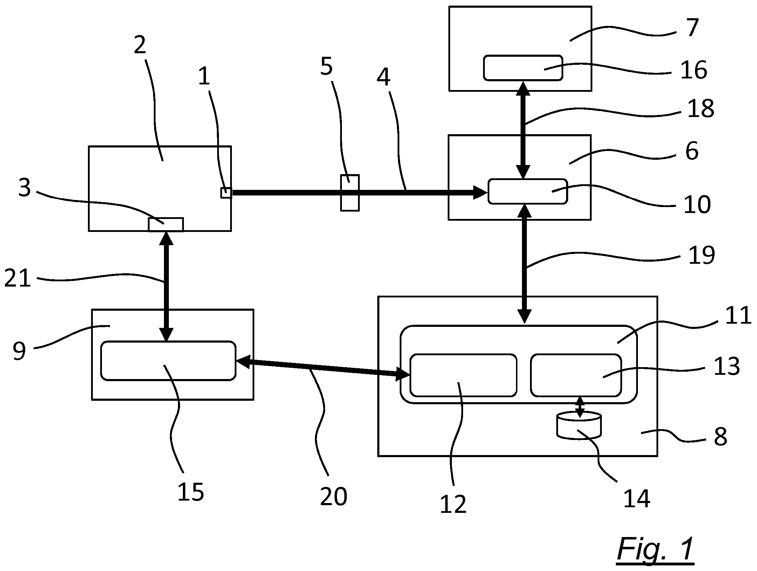

In Fig. 1 ist vereinfacht und schematisch ein erfindungsgemäßes System dargestellt, welches dazu ausgebildet ist, eine Konfiguration einer Schnittstelle 1 zu ermitteln sowie optional dazu ausgebildet ist, eine Neukonfiguration dieser Schnittstelle 1 durchzuführen. Die Schnittstelle 1 ist Teil einer ebenfalls in Fig. 1 dargestellten Netzwerkkomponente 2. Die Netzwerkkomponente 2 ist über eine Managementschnittstelle 3 in ein Netzwerk eingebunden. Ein Zugriff auf die Schnittstelle 1 ist mittels einer Datenverbindung 4 möglich, die von der Schnittstelle 1 über den Netzwerkdosenanschluss einer Netzwerkdose 5 aufgebaut werden kann. Der Netzwerkdosenanschluss ist dabei mit der Schnittstelle 1 datenübertragend verbunden. Die Netzwerkkomponente 2 ist insbesondere ein LAN-Switch, der beispielsweise zusammen mit einem Cat5+ Patchfeld in einem Technikraum angeordnet und über dieses Cat5+ Patchfeld mit dem Netzwerkdosenanschluss der Netzwerkdose 5 verbunden ist. Die Netzwerkdose 5, die auch als LAN-Dose bezeichnet wird, ist beispielsweise in einem Büro angeordnet.

Das erfindungsgemäße System gemäß dem Ausführungsbeispiel von Fig. 1 weist einen Vermittler 6, ein Endgerät 7, eine Kommunikationszentrale 8 und einen Aktivierungsserver 9 auf. Der Vermittler 6 wird zur Durchführung des erfindungsgemäßen Verfahrens, beispielsweise mittels eines Patchkabels, über eine LAN-Schnittstelle des Vermittlers 6 an den betreffenden Netzwerkdosenanschluss der Netzwerkdose 5 angeschlossen. Die Datenverbindung 4 wird dabei zwischen der Netzwerkdose 5 und dem Vermittler 6 durch das Patchkabel aufgebaut.

Über die Datenverbindung 4 versucht der Vermittler 6 fortwährend Lokalisationsinformationen von der Schnittstelle 1 auszulesen. Der Vermittler 6 weist einen Speicher auf, in welchem die ausgelesenen Lokalisationsinformationen zwischengespeichert werden. Darüber hinaus weist der Vermittler 6 zwei weitere Schnittstellen auf, nämlich eine WLAN-Schnittstelle für eine drahtlose Verbindung zum Endgerät 7 und ein Mobilfunkmodem oder einen USB-Anschluss zur Verbindung mit einem externen Mobilfunkmodem. Über das Mobilfunkmodem kann eine Verbindung zur Kommunikationszentrale 8 hergestellt werden.

Der Vermittler 6 ist ein mobiles Gerät und insbesondere batteriebetrieben. Dabei wird die Hardware des Vermittlers 6 beispielweise durch einen handelsüblichen Router bereitgestellt, wohingegen die Software auf dem Vermittler 6 speziell für die Ausführung des erfindungsgemäßen Verfahrens ausgebildet ist. Vorzugsweise läuft auf dem Vermittler 6 ein Linux-basiertes Betriebssystem, für welches ein C-Compiler zur Verfügung steht. Insbesondere ist die Hardware ein Mini-Router, auf welchem das offene Router-Betriebssystem OPENWRT oder dessen Variante LEDE installiert ist.

Die auf dem Vermittler 6 installierte Software überwacht permanent die LAN-Schnittstelle des Vermittlers 6 auf eingehende Lokalisationsinformationen, beispielsweise in Form von LLDP-Nachrichten, CDP-Nachrichten oder FDP-Nachrichten, die selbsttätig von der Schnittstelle 1 über die Netzwerkdose 5 ausgesendet werden. Die Software auf dem Vermittler 6 kodiert die Lokalisationsinformationen und speichert sie auf dem Vermittler 6 zwischen. Darüber hinaus wartet eine Hauptroutine der Software auf dem Vermittler 6 auf von der Kommunikationszentrale 8 oder vom Endgerät 7, insbesondere von einem Browser auf dem Endgerät 7, eingehende HTTP-Verbindungen.

Der Vermittler 6 dient dem Techniker als sogenannter Access-Point und Proxy für einen Zugriff auf eine Benutzeroberfläche, insbesondere Web-GUI, die durch die Kommunikationszentrale 8 bereitgestellt wird. Hierfür weist der Vermittler 6 eine Proxy-Funktion 10 auf. Der Techniker ist mit dem Endgerät 7 über die WLAN-Schnittstelle des Vermittlers 6 mit dem Vermittler 6 verbunden und nutzt die Proxy-Funktion 10 des Vermittlers 6 für die Kommunikation mit der Kommunikationszentrale 8.

Das Endgerät 7 ist ein mobiles Gerät, welches über das vom Vermittler 6 aufgespannte WLAN mit dem Vermittler 6 kommunizieren kann. Insbesondere ist das Endgerät 7 ein Tablet oder Smartphone. Auf dem Endgerät 7 können Eingaben und Ausgaben erfolgen. Insbesondere weist das Endgerät 7 hierfür ein Display, vorzugsweise mit Touch-Funktion, auf. Auf dem Display wird die von der Kommunikationszentrale 8 generierte Benutzeroberfläche dargestellt.

Die Kommunikationszentrale 8 ist vorzugsweise im öffentlichen Internet angeordnet und über das Internet sowie vorzugsweise zumindest teilweise über Mobilfunk mit dem Vermittler verbunden. Die Kommunikationszentrale 8 ist vorzugsweise über ein privates Netz oder in einer anderen Variante über das öffentliche Internet auch mit dem Aktivierungsserver 9 verbunden. Alle Verbindungen über das öffentliche Internet sowie über Mobilfunk sind verschlüsselt. Auf der Kommunikationszentrale 8 läuft ein Kommunikationszentralen-Servlet 11, welches eine zentrale Server-Applikation ist, die auch eine HTML-basierte Benutzeroberfläche, insbesondere Web-GUI, generiert. Die Benutzeroberfläche ist mittels HTTPS vom Endgerät 7, insbesondere mittels des bereits genannten Browsers auf dem Endgerät 7, über den Vermittler 6 zu erreichen. Weiter nimmt das Kommunikationszentralen-Servlet über einen Server-Port mittels SSL/TLS verschlüsselte TCP-Verbindungen vom Aktivierungsserver 9 entgegen. Das Kommunikationszentralen-Servlet 11 umfasst ein Port-Management 12 für die Kommunikation mit dem Aktivierungsserver 9 und eine Bestandsdatenverwaltung 13, welche mit einer Datenbank 14 in Verbindung steht und auf der Kommunikationszentrale 8 gespeicherte oder zwischengespeicherte Datensätze, etwa von bekannten Aktivierungsservern 9 oder von Berechtigungen für bestimmte Vermittler 6 und Nutzer verwaltet. Auch Vorlagen für die Provisionierung der Netzwerkkomponente 2 werden in der Datenbank 14 verwaltet.

Auf der Kommunikationszentrale 8 sind ferner öffentliche Schlüssel für den Aktivierungsserver 9 und die Kommunikationszentrale 8 hinterlegt. Für die Konfiguration der Schnittstelle 1 können in Abhängigkeit von Hardware und Software der Netzwerkkomponente 2 unterschiedliche Befehle notwendig sein. Hierzu sind verschiedene Typen von Netzwerkkomponenten 2 an der Kommunikationszentrale 8 hinterlegt. Neue Typen werden automatisch hinzugefügt, wenn der Aktivierungsserver 9 auf der Suche nach einer Netzwerkkomponente 2 diese Netzwerkkomponente 2 analysiert und das Ergebnis an die Kommunikationszentrale 8 sendet. Gefundene Netzwerkkomponenten werden in einem Zwischenspeicher zwischengespeichert und vorzugsweise nach einer konfigurierbaren Zeit von beispielsweise fünfzehn Minuten automatisch wieder gelöscht.

Das Kommunikationszentralen-Servlet 11 stellt eine Benutzeroberfläche bereit, die beispielsweise auf Basis von JavaServer Pages (JSP) in HTML implementiert ist, so dass eine Vielzahl von Änderungsmöglichkeiten auch im laufenden Betrieb möglich sind, ohne das Kommunikationszentralen-Servlet 11 selbst verändern zu müssen. Auf dem Endgerät 7 ist der bereits genannte und hier erstmalig mit dem Bezugszeichen 16 bezeichnete Browser installiert, welcher die von der Kommunikationszentrale 8 über den Proxy 10 bereit gestellten Inhalte auf dem Endgerät 7 darstellt. Der Proxy 10 fügt bei HTTP Anfragen, die vom Browser 16 auf dem Endgerät 7 an den Proxy 10 gestellt werden, die codierten Lokalisationsinformationen in einen HTTPS Request in Richtung Kommunikationszentrale 8 ein. Für die Anmeldung werden Nutzername und Passwort gegen auf der Kommunikationszentrale 8 definierte Nutzer und Passworte geprüft. Ein Nutzer kann nur eine Session gleichzeitig haben. Ein erfolgreich angemeldeter Nutzer braucht sich über die Dauer seiner Session nicht erneut mit Username und Passwort anzumelden. Meldet sich ein Nutzer für eine neue Session an, wird eine eventuell vorhandene alte Session beendet. Der Request-Header der HTTPS-Anfrage, die bei Kommunikation vom Nutzer bei der Kommunikationszentrale 8 eingeht, wird dahingehend untersucht, ob Lokalisationsinformationen vorhanden sind. Sofern dies der Fall ist, wird die Nutzer-Session mit Lokalisationsinformationen verknüpft und eine Web-GUI wird generiert, in der die decodierten Lokalisationsinformationen von der Kommunikationszentrale 8 in Form eines HTTPS Response an den Proxy 10 des Vermittlers 6 über diesen auf dem Browser 16 des Endgeräts 7 dargestellt werden. Daneben kann über die Session und die damit verbundenen Lokalisationsinformationen auch das Abfragen von Informationen über die _Schnittstelle 1 der Netzwerkkomponente 2 angestoßen werden.

Der Aktvierungsserver 9 weist ein Aktivierungsserver-Servlet 15 auf. Der Aktivierungsserver 9 ist dazu ausgebildet, die Konfiguration der Netzwerkkomponente 2 direkt per SSH vorzunehmen. In einer alternativen Ausgestaltung kann der Aktivierungsserver 9 jedoch auch als Proxy ausgebildet sein, der eine entsprechende Schnittstelle ansteuert. Das Aktivierungsserver-Servlet 15 ist eine permanent laufende Server-Applikation, die Nutzername sowie Passwort zum Zugriff auf die Netzwerkkomponente 2 kennt. Das Aktivierungsserver-Servlet 15 verbindet sich mit der Kommunikationszentrale 8, also insbesondere mit dem Kommunikationszentralen-Servlet 11, und wartet auf Befehle. Wenn ein Befehl von der Kommunikationszentrale 8 beim Aktivierungsserver 9 eintrifft, dann baut der Aktivierungsserver 9 eine SSH-Sitzung zur betreffenden Netzwerkkomponente 2 auf und führt den entsprechenden Befehl aus. Anschließend wird eine Meldung über das Ergebnis an die Kommunikationszentrale gesendet. Der Aktivierungsserver 9 besitzt einen eindeutigen privaten Schlüssel, mit dem er sich gegenüber der Kommunikationszentrale 8 autorisiert.

Von der Schnittstelle 1 zum Vermittler 6 werden die Lokalisationsinformationen über die Datenverbindung 4 an den Vermittler 6 übertragen. Der Vermittler 6 und das Endgerät 7 stehen über eine WLAN-Verbindung 18 miteinander in Verbindung. Mit einer Kommunikationsverbindung 19, die vorzugsweise eine Mobilfunkverbindung aufweist, ist der Vermittler 6 mit der Kommunikationszentrale 8 verbunden. Über eine weitere Kommunikationsverbindung 20 kommunizieren die Kommunikationszentrale 8 und der Aktivierungsserver 9 bzw. das Kommunikations-Servlet 11 und das Aktivierungsserver-Servlet 15 miteinander. Die Kommunikationsverbindungen 19 und 20 werden vorzugsweise in parallelen Kommunikationsnetzen hergestellt oder auf gleiche oder unterschiedliche Weise in einem gemeinsamen Kommunikationsnetz hergestellt. Insbesondere wird die weitere Kommunikationsverbindung 20 vorzugsweise über ein privates Netz hergestellt, kann jedoch auch über das öffentliche Internet erfolgen. Die Kommunikationsverbindung 19 kann ebenfalls über ein privates Mobilfunknetz bereitgestellt werden oder verwendet vorzugsweise das öffentliche Internet. Die Verbindung vom Aktivierungsserver 9 zur Netzwerkkomponente 2 wird über eine Netzwerkverbindung 21 hergestellt.

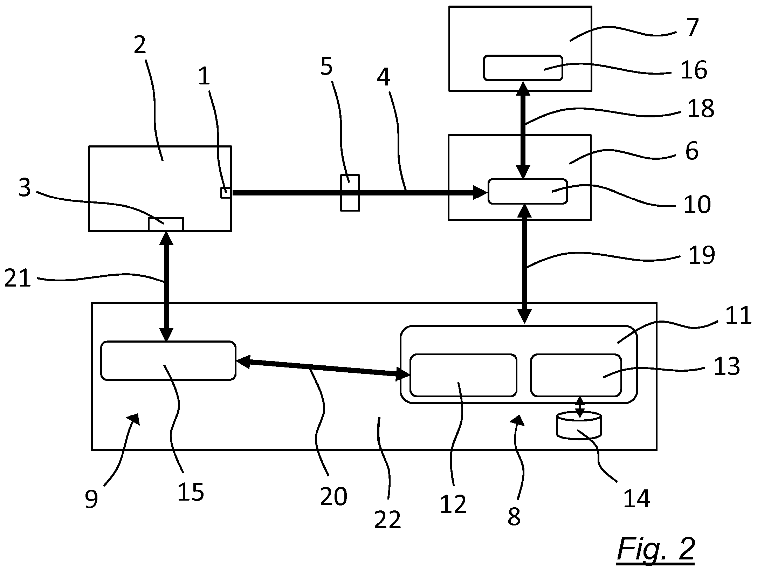

Fig. 2 zeigt ein zweites Ausführungsbeispiel des erfindungsgemäßen Systems zum Ermitteln und Verändern einer Konfiguration einer Schnittstelle 1 gemäß einem zweiten Ausführungsbeispiel der Erfindung, welches weitgehend dem Ausführungsbeispiel gemäß Fig. 1 gleicht. Gleiche Bezugszeichen bezeichnen in allen Figuren gleiche oder einander entsprechende Teile. Im Ausführungsbeispiel gemäß Fig. 2 sind die Kommunikationszentrale 8 und der Aktivierungsserver 9 zu einer Aktivierungseinheit 22 zusammengefasst, welche den Aktvierungsserver 9 und die Kommunikationszentrale 8 beinhaltet. Die Kommunikationszentrale 8 ist dabei nicht über das öffentliche Internet mit dem Aktivserver 9 verbunden. Stattdessen sind das Kommunikationszentralen-Servlet 11 und das Aktivierungsserver-Servlet 15 auf einer gemeinsamen Hardware der Aktvierungseinheit 22 implementiert und können somit intern miteinander kommunizieren. Die Anordnung gemäß Fig. 2 ist insofern eine vereinfachte Anordnung, welche insbesondere eingesetzt werden kann, wenn nur ein einziger Vermittler 6 und ein einziger Aktivierungsserver 9 vorgesehen sind. Sobald jedoch mehr als ein Vermittler und mehr als ein Aktivierungsserver 9 vorgesehen sind, kann es sein, dass diese Aktivierungsserver 9 und Vermittler 6 jeweils an zueinander unterschiedlichen Orten angeordnet sind, so dass die von den Aktivierungsservern 9 separate Anordnung der Kommunikationszentrale 8 in öffentlichen Internet vorteilhaft ist.

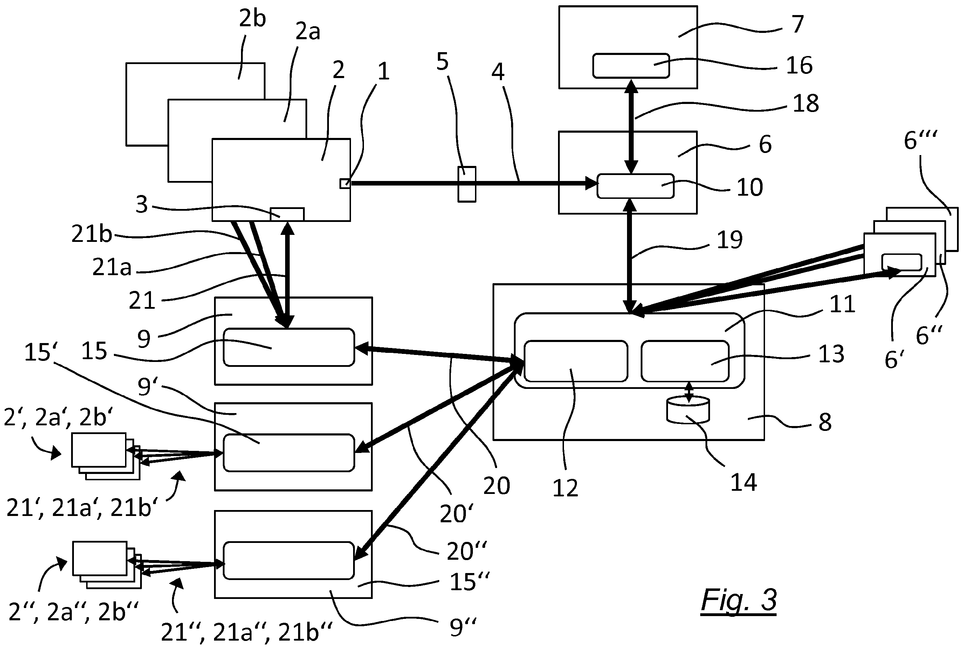

Fig. 3 zeigt eine Ausführungsform der Erfindung, bei der zusätzlich zum Aktivierungsserver 9 weitere Aktivierungsserver 9' und 9" vorgesehen sind. Die Eigenschaften der mit wenigstens einem Hochstrich bezeichneten Teile entsprechen hierbei und im Folgenden zumindest im Wesentlichen jeweils dem entsprechend ohne Hochstrich bezeichneten Teil. Gleiches gilt für mit zusätzlichen Buchstaben bezeichnete Teile. Darüber hinaus ist die Anzahl einander entsprechender Teile, also beispielsweise der Aktivierungsserver 9, 9' und 9" nicht auf die in Fig. 3 dargestellte Anzahl beschränkt, sondern kann auch darüber oder sogar weit darüber liegen.

Jeder Aktivierungsserver 9, 9', 9" ist über die Netzwerkkomponente 2, 2' bzw. 2" hinausgehend mit weiteren Netzwerkkomponenten über das Kommunikationsnetz, in welchem auch die weitere Kommunikationsverbindung 20 eingerichtet wird, oder über ein zusätzliches Kommunikationsnetz verbunden und kann über das Kommunikationsnetz administrativ auf diese weiteren Netzwerkkomponenten und die Netzwerkkomponenten 2, 2' und 2" zugreifen. So ist im Ausführungsbeispiel gemäß Fig. 3 der Aktivierungsserver 9 über eine Netzwerkverbindung 21a mit einer Netzwerkkomponente 2a und über eine Netzwerkverbindung 21b mit einer Netzwerkkomponente 2b verbunden. Entsprechend sind in Fig. 3 weitere Netzwerkverbindungen 21', 21a' und 21b' zur Verbindung des Aktivierungsservers 9' mit der Netzwerkkomponente 2' und Netzwerkkomponenten 2a' und 2b' vorgesehen sowie weitere Netzwerkverbindungen 21", 21a" oder 21b" vorgesehen, mittels denen der Aktivierungsserver 9" mit jeweils einer der Netzwerkkomponenten 2", 2a" und 2b" verbunden ist.

Der Aktivierungsserver 9' ist über eine weitere Kommunikationsverbindung 20' und der Aktivierungsserver 9" über eine weitere Kommunikationsverbindung 20" mit dem Port-Management 12 des Kommunikationszentralen-Servlets 11 auf der Kommunikationszentrale 8 verbunden. Die Kommunikationsverbindungen 20' und 20" werden in dem Kommunikationsnetz eingerichtet, in dem auch die weitere Kommunikationsverbindung 20 eingerichtet wird, also beispielsweise im öffentlichen Internet. Gleichsam können sich zusätzlich zum Vermittler 6 weitere Vermittler, wie die beispielhaft in Fig. 3 dargestellten Vermittler 6', 6" und 6"', über Mobilfunkverbindungen 19', 19" und 19''' oder über andere Verbindungen, etwa im öffentlichen Internet, mit der Kommunikationszentrale 8 verbinden, um von dort aus je nach Berechtigung eine oder mehrere der Netzwerkkomponenten 2, 2a, 2b, 2', 2a', 2b', 2", 2a" oder 2b" zu konfigurieren, insbesondere zu provisionieren. Unter dem Konfigurieren einer Netzwerkkomponente 2 ist dabei beispielsweise ein Zuweisen von Einstellungen, um nachfolgend beispielsweise einen Drucker, Kopierer oder Computer über die Schnittstelle 1 betreiben zu können, zu verstehen. Ein alternatives Konfigurieren ist eine Dokumentation der Schnittstelle, also das Beschreiben der sogenannten Description der Schnittstelle 1, womit die Schnittstelle 1 direkt in der Netzwerkkomponente 2 dokumentiert wird.

Das System gemäß Fig. 3 ist mandantenfähig ausgelegt, das heißt verschiedene Kunden erhalten logisch getrennte Sub-Systeme, wobei nur Systemadministratoren die Daten aller Mandanten einsehen können. Innerhalb eines Mandanten, also innerhalb eines jeweiligen Sub-Systems, können beliebig viele Projekte zur Rechteverwaltung und Bündelung von Ressourcen angelegt werden. Weiter können jedem Mandanten beliebig viele Aktvierungsserver zugeordnet werden. In der Benutzeroberfläche, die auch Graphical User Interface (GUI) oder Web-GUI genannt wird und die von der Kommunikationszentrale erzeugt wird, können neue Projekte angelegt werden. Zudem lassen sich Name sowie Projektzuordnung ändern und nicht zugewiesene Aktvierungsserver wieder löschen. In der Web-GUI wird angezeigt, ob ein jeweiliger Aktivierungsserver 9 aktuell mit der Kommunikationszentrale 8 verbunden ist.

Es kann auch eine Mehrzahl von Vermittlern 6 innerhalb eines Mandanten angelegt werden. Das Anlegen von Vermittlern 6 erfolgt wiederum in der GUI, die von der Kommunikationszentrale 8 bereitgestellt wird. Die Beschreibung der Vermittler 6 lässt sich ändern. Auch können Vermittler 6 gelöscht werden.

Für die Verbindungen zwischen der Kommunikationszentrale 8 und den Aktivierungsservern 9, 9' und 9" ist vorgesehen, dass das Kommunikationszentralen-Servlet 11 einen TCP-Server-Port öffnet, dessen Nummer und IP-Adresse dem jeweiligen Aktivierungsserver-Servlet 15, 15' oder 15" als Parameter übergeben wurde. Dann lädt das Kommunikationszentralen-Servlet 11 eine Datei mit dem privaten Schlüssel, wobei der Name der Datei und das Passwort ebenfalls dem Aktivierungsserver-Servlet 15 übergeben wurden. Mit dem Schlüssel wird ein SSL-Kontext eingerichtet, so dass nachfolgend die Kommunikationszentrale bereit für eingehende Verbindungen ist. Bei jeder neuen Verbindung wird ein sogenannter AUTH-Request an den jeweiligen Aktivierungsserver 9 gesendet, damit sich dieser gegenüber der Kommunikationszentrale 8 mit seiner Seriennummer und einer digitalen Signatur authentifiziert. Wenn der jeweilige Aktivierungsserver 9 der Kommunikationszentrale 8 bekannt ist und sich die digitale Signatur des Aktvierungsservers 9 mit dem lokal vorhandenen öffentlichen Schlüssel verifizieren lässt, wird die Verbindung akzeptiert und steht für Befehle zur Verfügung. Anderenfalls wird sie beendet.

Für das Erkennen einer jeweiligen Netzwerkkomponente 2, also beispielsweise eines Switches oder eines Routers, mit der betreffenden Schnittstelle 1, ist ein sogenannter "Broadcast-Mechanismus" implementiert: Wenn sich ein Nutzer über einen Vermittler 6 anmeldet, dann wird der Kommunikationszentrale gegebenenfalls die ausgelesene Lokalisationsinformation, also beispielsweise die LLDP-Nachricht, der Schnittstelle 1 übermittelt. Hieraus kann in der Regel die IP-Adresse der Netzwerkkomponente 2, zu der die Schnittstelle 1 gehört, ermittelt werden.

Um weitere Informationen über den Typ der Netzwerkkomponente 2 zu erhalten, wird eine Abfrage über den zugeordneten Aktivierungsserver 9 angestoßen. Hierzu kommen zunächst alle Aktivierungsserver 9 in Frage, die denselben Projekten zugeordnet sind wie der Nutzer. Zur Abfrage wird für jeden Aktvierungsserver 9 ein eigener "Thread" gestartet, der die Abfrage abarbeitet. Die Antworten werden in eine gemeinsame Warteschlange, insbesondere "Queue", gestellt. Sobald nach Abfrage der Netzwerkkomponente 2 die erste erfolgreiche Antwort vorliegt, wird ein Ergebnis an die Kommunikationszentrale 8 zurückgeliefert. Wenn keine Anfrage ein positives Ergebnis liefert oder es zu sogenannten "Timeouts" kommt, wird eine Fehlermeldung geliefert. Wichtig bei diesem Vorgehen ist, dass die SSL/TLS-Verbindungen, also die weiteren Kommunikationsverbindungen 20, 20' und 20", von den Aktivierungsservern 9, 9', 9" zur Kommunikationszentrale 8 permanent benötigt werden. Da die Kommunikationszentrale 8 diese nicht im Bedarfsfall aufbauen kann, ist ein sogenannter "Watch dog" implementiert, der in einem Intervall von beispielsweise dreißig Sekunden immer wieder ein sogenanntes "ECHO-Paket" über alle Netzverbindungen 20, 20' und 20" sendet. In Erwiderung darauf sendet jeweils jeder Aktivierungsserver 9, 9', 9" eine Antwort zurück an die Kommunikationszentrale 8.

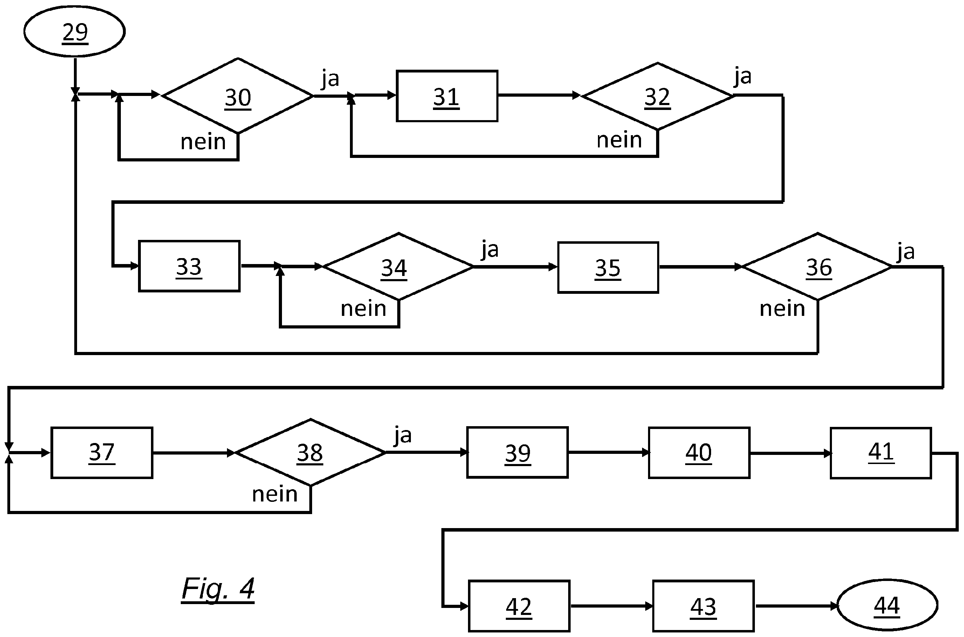

Fig. 4 veranschaulicht einen vereinfachten Verfahrensablauf gemäß einem Ausführungsbeispiel der Erfindung, wobei mit diesem Verfahrensablauf die Konfiguration einer nicht notwendigerweise bekannten Schnittstelle 1 ermittelt wird. Das Verfahren kann beispielsweise mit dem System nach einem der Figuren 1 bis 3 durchgeführt werden.

Das Verfahren beginnt mit dem Start 29 des Proxy-Threads der Proxy-Funktion 10 auf dem Vermittler 6. In einer Abfrage 30 wartet der Proxy-Thread der Proxy-Funktion 10 des Vermittlers 6 auf einen eingehenden HTTP-Request durch einen Nutzer von einem Browser16 auf einem Endgerät 7, welcher die URL der Proxy-Funktion 10 aufruft. Existiert ein HTTP-Request, liest der Proxy-Thread der Proxy-Funktion 10 in einem Schritt 31 die codierten Lokalisationsinformationen aus dem "shared memory" Bereich des Vermittle3rs 10 aus und fügt diese in den HTTP-Request, der vom Browser 16 gesendet wurde, ein und versendet diesen als HTTPS-Request über die Kommunikationsverbindung 19 an die Kommunikationszentrale 8. In einer darauf folgenden Abfrage 32 ermittelt der Proxy-Thread der Proxy-Funktion 10 auf dem Vermittler 6, ob eine HTTPS-Response vom Kommunikationszentralen-Servlet 11 der Kommunikationszentrale 10 vorliegt. Wenn dies der Fall ist, leitet der Proxy-Thread der Proxy-Funktion 10 des Vermittlers 6 diese HTTPS-Response, in der eine Darstellung einer Web-GUI enthalten ist, in einem Schritt 33 an den Browser 16 als HTTP-Request weiter.

In dem Fall, dass noch keine valide Nutzersession besteht, enthält die vom Kommunikationszentralen-Servlet 11 der Kommunikationszentrale 8 an die Proxy-Funktion 10 gelieferte Web-GUI zudem eine nicht dargestellte Abfrage zu einem Username und einem Passwort. In einer Abfrage 34 wartet der Proxy-Thread der Proxy-Funktion 10 darauf, dass vom Browser 16 ein HTTP Request durch eine Benutzerinteraktion, z.B. die Eingabe von Username und Passwort oder das Ausführen von Befehlen in der Web-GUI, eintrifft. Trifft ein derartiger HTTP-Request ein, wird in einem Schritt 35 durch den Proxy-Thread der Proxy-Funktion 10 auf dem Vermittler 6 die aktuelle Lokalisationsinformation in den HTTP-Request eingefügt und dieser als HTTPS Request an das Kommunikationszentralen-Servlet 11 der Kommunikationszentrale 8 versendet. Das Kommunikationszentralen-Servlet 11 prüft hiernach in einer Abfrage 36 mittels seiner Bestandsdatenverwaltung 13, ob der Vermittler 6 und der über das Endgerät 7 mittels Nutzerdaten, insbesondere Nutzerinformationen, zugreifende Nutzer authentisch sind. Wenn dies nicht der Fall ist, wird der Zugang verwehrt und beispielsweise wieder auf neue Lokalisationsinformationen oder zumindest wieder auf eine neue Eingabe von Nutzerdaten gewartet.

Bei einer bestehenden Nutzer-Session und der vom Nutzer per Web-GUI angefragten Ermittlung der Konfigurationseinstellungen befragt das Port-Management 12 des Kommunikationszentralen-Servlets 11 in einem Schritt 41 alle ihm bekannten Aktivierungsserver 9, 9', 9", insbesondere Aktivierungsserver-Servlets 15, 15', 15", nach den Lokalisationsinformationen, wobei die Lokalisationsinformationen, die von der Schnittstelle 1 zum Vermittler 6 übertragen werden, die vom Vermittler 6 zur Kommunikationszentrale 8 übertragen werden und die von der Kommunikationszentrale 8 zu den Aktivierungsservern 9 übertragen werden, jeweils durchaus in zueinander unterschiedlicher Form, insbesondere in unterschiedlicher Weise kodiert, vorliegen können. Durch eine Abfrage 38 ist veranschaulicht, ob ein Aktivierungsserver 9 erkennt, dass die in den Lokalisationsinformationen angegebene Netzwerkkomponente 2 durch ihn erreichbar ist. Sobald dies der Fall ist, folgt ein Schritt 39, in welchem der Aktivierungsserver 9 den Typ und die Softwareversion der Netzwerkkomponente 2 ermittelt und diese Informationen an die Kommunikationszentrale 8, insbesondere an das Kommunikationszentralen-Servlet 11, zurückmeldet. In einem nachfolgenden Schritt 40 ermittelt das Kommunikationszentralen-Servlet 11 auf Basis der Herstellerinformation und der Softwareinformation eine zugehörige Vorlage, insbesondere ein zugehöriges Template, und schickt einen Befehl an den Aktvierungsserver 9, um spezifische Informationen zu erhalten.

Der Aktvierungsserver 9, insbesondere das Aktvierungsserver-Servlet 15, stellt daraufhin in einem Schritt 41 eine Managementverbindung, insbesondere mittels SSH, zur Netzwerkkomponente 2 her, fragt Informationen über die Schnittstelle 1 auf Basis der im Template gelieferten Befehlsfolgen ab und meldet diese Informationen an die Kommunikationszentrale 8, insbesondere an das Kommunikationszentralen-Servlet 11, zurück. In einem Schritt 42 kodiert das Kommunikationszentralen-Servlet 11 die erhaltenen Informationen in einem HTTPS-Response und meldet diese in der bereitgestellten grafischen Benutzeroberfläche, insbesondere Web-GUI, an den Proxy 10 des Vermittlers 6 zurück. In einem Schritt 43 wird schließlich die HTTPS-Response über den Proxy 10 weiter an den anfragenden Browser 16 übermittelt und wird die Web-GUI zusammen mit den darin eingebetteten Schnittstelleninformationen am Endgerät 7 dargestellt. Damit ist soweit das mit dem Bezugszeichen 44 bezeichnete Ende des dargestellten Verfahrensablaufs erreicht.

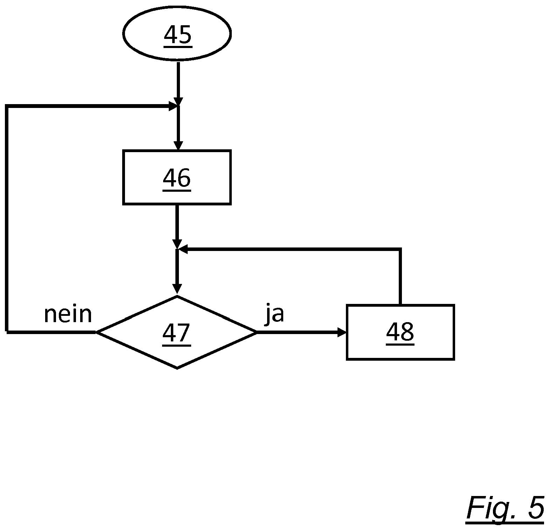

Fig. 5 veranschaulicht einen vereinfachten Verfahrensablauf gemäß einem Ausführungsbeispiel der Erfindung, wobei mit diesem Verfahrensablauf das zyklische Abfragen von Lokalisationsinformationen, die einer Schnittstelle 1 einer Netzwerkkomponente 2 zugeordnet sind, beschrieben ist. Das Verfahren beginnt mit dem Start 45 des Schnittstellen-Threads der Proxy-Funktion 10 auf dem Vermittler 6. Dieser Thread wird automatisch auf dem Vermittler 6 gestartet und läuft permanent. Als erstes wird in einem Schritt 46 der "shared memory" Bereich auf dem Vermittler 6 mit leeren Lokalisationsinformationen gefüllt. Durch eine Abfrage 47 werden durch den Schnittstellen-Thread der Proxy-Funktion 10 zwei Zustände ermittelt. Der erste Zustand beschreibt den Status, ob der Port, an dem die Schnittstelle 1 angeschlossen ist, aktiviert oder deaktiviert ist. Der zweite Zustand beschreibt, ob Lokalisationsinformationen über die Datenverbindung 4 empfangen wurden. Wenn der Schnittstellenstatus aktiviert ist und über die Datenverbindung 4 Lokalisationsinformationen empfangen wurden, werden in einem Schritt 48 die Lokalisationsinformationen codiert und im "shared memory" Bereich des Vermittlers 6 abgelegt. Danach wird der Prozess mit der Abfrage 47 fortgesetzt.

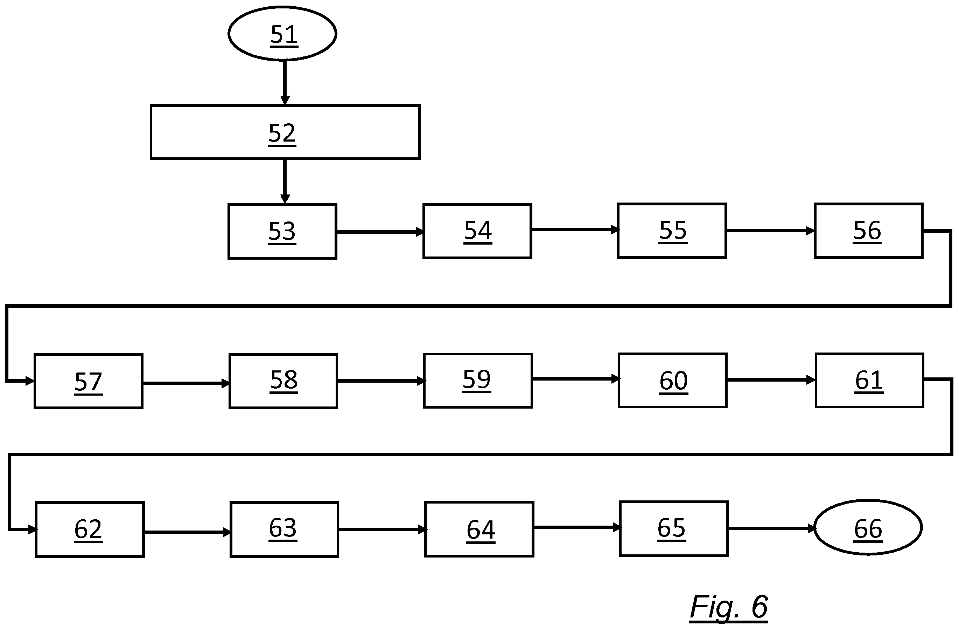

Fig. 6 zeigt vereinfacht einen Verfahrensablauf beim erfindungsgemäßen Verfahren zum Ermitteln und Verändern der Konfiguration der Schnittstelle 1. Das Verfahren baut auf dem Verfahren zum Ermitteln der Konfiguration der Schnittstelle 1 auf. Auf den mit dem Bezugszeichen 51 bezeichneten Start des Verfahrens folgt daher zunächst das Ermitteln der Konfiguration der Schnittstelle 1 in einem Schritt 52, beispielsweise gemäß dem Verfahrensablauf von Fig. 4. Hiernach folgen die Schritte zum Konfigurieren der Schnittstelle, beginnend mit einem Schritt 53, wonach der Browser 16 auf dem Endgerät 7 einen HTTPS-Request an den Proxy 10 des Vermittlers 6 sendet, wenn dies vom Nutzer durch Eingabe am Endgerät 7 auf der angeforderten Web-GUI angefordert wird.

In einem Schritt 54 leitet der Proxy 10 den HTTPS-Request an das Kommunikationszentralen-Servlet 11 weiter. In Erwiderung darauf generiert das Kommunikationszentralen-Servlet 11 in einem Schritt 55 eine neue Benutzeroberfläche, insbesondere GUI, in welcher Konfigurationsparameter abgefragt werden und sendet diese Benutzeroberfläche zurück an den Proxy 10 des Vermittlers 6. Der Proxy 10 leitet die Benutzeroberfläche in einem Schritt 56 an den Browser 16 des Endgeräts 7 weiter.

Durch Ausfüllen der benötigten Parameter durch den Nutzer an der Web-GUI wird ein Konfigurationswunsch generiert, welcher in einem Schritt 57 vom Endgerät 7 an den Vermittler 6, insbesondere vom Browser 16 an den Proxy 10, übermittelt wird. Der Konfigurationswunsch mit den vom Nutzer eingegebenen Parametern wird in einem Schritt 58 über den Proxy 10 an das Kommunikationszentralen-Servlet 11 weitergeleitet. Das Kommunikationszentralen-Servlet 11 sollte noch aktuelle Informationen über die Netzwerkkomponente 5 in seinem Zwischenspeicher haben, nämlich insbesondere aus dem Schritt 52, also dem Ermitteln der Konfiguration der Schnittstelle 1. Anhand dieser Informationen ermittelt das Kommunikationszentralen-Servlet 11 eine passende Vorlage, insbesondere ein entsprechendes Template, und befüllt dieses Template mit Parametern die an den Aktivierungsserver 9 übermittelt werden müssen. Dies erfolgt in einem Schritt 59. Die Parameter sind dabei insbesondere die im Schritt 58 erhaltenen Parameter oder werden mit Hilfe der erhaltenen Parameter generiert.

In einem Schritt 60 übermittelt das Kommunikationszentralen-Servlet 11 den Konfigurationswunsch, insbesondere in Form des ausgefüllten Templates, mittels eines Befehls an den zuständigen Aktivierungsserver 9, insbesondere an das Aktivierungsserver-Servlet 15. Der Aktivierungsserver 9 stellt daraufhin, insbesondere mittels SSH, eine Konfigurationsverbindung zur Managementschnittstelle 3 der zu konfigurierenden Netzwerkkomponente 2 her. Durch Ausführen des hierfür vorgesehenen Skripts auf Basis des gelieferten Templates auf der Netzwerkkomponente 2 konfiguriert der Aktivierungsserver 9 in einem Schritt 62 die Schnittstelle 1.

Nach erfolgreicher Konfiguration der Schnittstelle 1 meldet der Aktivierungsserver 9 das Ergebnis der Konfiguration in einem Schritt 63 an die Kommunikationszentrale, insbesondere das Kommunikationszentralen-Servlet 11, zurück. In einem nachfolgenden Schritt 64 generiert das Kommunikationszentralen-Servlet 11 eine modifizierte Benutzeroberfläche, insbesondere GUI, in der das Ergebnis der Schnittstellenkonfiguration dargestellt wird, und sendet die modifizierte Benutzeroberfläche an den Proxy 10 auf dem Vermittler 6. Über den Proxy 10 wird die Benutzeroberfläche nebst Konfigurationsergebnis weiter an den Browser 16 des Endgeräts 7 übermittelt, an welchem das Ausführen der Schnittstellenkonfiguration beauftragt wurde. Dies erfolgt in einem Schritt 65. Der Nutzer erhält also eine Rückmeldung, insbesondere in Form einer Darstellung auf einem Display des Endgeräts 7, über das Ergebnis der Konfiguration der Schnittstelle 1. Damit ist das mit dem Bezugszeichen 66 bezeichnete Ende des in Fig. 5 dargestellten Verfahrens erreicht.

Ein besonders vorteilhaftes Merkmal der Erfindung ist, dass die Lokalisationsinformationen in einem HTTP-Request kodiert werden, so dass der Aktivierungsserver 9 diese Lokalisationsinformationen bereits in der Anfrage erhält und darauf basierend die Konfigurationseinstellungen von der Netzwerkkomponente 2 ausliest. Auch diese ausgelesenen Konfigurationsinformationen werden bereits im HTTP-Response kodiert und wieder am Endgerät 7 in der Benutzeroberfläche dargestellt. Dies bewirkt eine minimale Kommunikation über das Kommunikationsnetz und damit insbesondere eine minimale Kommunikation über Mobilfunk und über das Internet. Es wird also nur ein geringes Datenvolumen übertragen, was insbesondere bei Übertragung in mobilen Netzen, in welchen Kosten in Abhängigkeit von übertragenem Datenvolumen entstehen, große Vorteile bietet. Darüber hinaus führt die Erfindung zu einer beträchtlichen Minimierung des Arbeitsaufwandes beim Ermitteln sowie beim Verändern einschließlich Dokumentieren der Konfiguration von Schnittstellen in Netzwerken.

Alle in der vorstehenden Beschreibung und in den Ansprüchen genannten Merkmale sind in einer beliebigen Auswahl mit den Merkmalen der unabhängigen Ansprüche kombinierbar. Die Offenbarung der Erfindung ist somit nicht auf die beschriebenen bzw. beanspruchten Merkmalskombinationen beschränkt, vielmehr sind alle im Rahmen der Erfindung sinnvollen Merkmalskombinationen als offenbart zu betrachten.

## Patentansprüche

1. Verfahren zum Ermitteln einer Konfiguration einer Schnittstelle (1), die Bestandteil einer Netzwerkkomponente (2) in einem Netzwerk ist und zu welcher jeglicher Datenfluss für einen Administrationszugriff auf die Schnittstelle (1) über wenigstens einen Aktivierungsserver (9) erfolgt,
a) wobei eine kabelgebundene Datenverbindung (4) zwischen der Schnittstelle (1) und einem Vermittler (6) über eine Ethernet-Schnittstelle des Vermittlers hergestellt wird, wobei der Vermittler (6) über die kabelgebundene Datenverbindung ausschließlich lesend auf die Schnittstelle (1) der Netzwerkkomponente (2) zugreift,
b) wobei der Vermittler (6) über die kabelgebundene Datenverbindung (4) Lokalisationsinformationen, die der Schnittstelle (1) der Netzwerkkomponente (2) zugeordnet sind, ausliest,
c) wobei die ausgelesenen Lokalisationsinformationen vom Vermittler (6) über eine Mobilfunkschnittstelle des Vermittlers (6) und zumindest teilweise durch ein Mobilfunknetz wenigstens eines Kommunikationsnetzes an eine im Kommunikationsnetz angeordnete Kommunikationszentrale (8) und weiter über die Kommunikationszentrale (8) an den wenigstens einen Aktivierungsserver (9) übermittelt werden,
d) wobei jeder Aktivierungsserver (9) ermittelt, ob die Netzwerkkomponente (2), deren Schnittstelle die an den jeweiligen Aktivierungsserver (9) übermittelten Lokalisationsinformationen zugeordnet sind, durch den jeweiligen Aktivierungsserver (9) erreichbar ist,
e) wobei der Aktivierungsserver (9), der ermittelt hat, dass die jeweilige Netzwerkkomponente (2) durch diesen Aktivierungsserver (9) erreichbar ist, mit einem Administrationszugriff auf die Netzwerkkomponente (2) zugreift und Konfigurationsinformationen, die der Netzwerkkomponente (2) und der Schnittstelle (1) zugeordnet sind, von der Netzwerkkomponente (2) abfragt und
f) wobei die abgefragten Konfigurationsinformationen ausgehend von der Netzwerkkomponente (2) über den jeweiligen Aktivierungsserver (9), weiter über die Kommunikationszentrale (8) und das Kommunikationsnetz und weiter über den Vermittler (6) an ein Endgerät (7), welches mittels einer Funkverbindung mit dem Vermittler (6) in Kontakt steht, übermittelt und vom Endgerät (7) bereitgestellt werden.

2. Verfahren nach Anspruch 1, **dadurch gekennzeichnet, dass** der Vermittler (6) mittels einer Funkverbindung mit dem Endgerät (7) in Kontakt steht, wobei das Endgerät (7) ein mobiles Endgerät ist.

3. Verfahren nach einem der vorherigen Ansprüche, **dadurch gekennzeichnet, dass** das Kommunikationsnetz zumindest teilweise durch das öffentliche Internet bereitgestellt wird und dass die Kommunikation zwischen der Kommunikationszentrale (8) und dem Vermittler (6) über eine Mobilfunkschnittstelle des Vermittlers (6) und zumindest teilweise über ein Mobilfunknetz erfolgt.

4. Verfahren nach einem der vorherigen Ansprüche, **dadurch gekennzeichnet, dass** die Kommunikationszentrale (8) eine Benutzeroberfläche für Eingaben am Endgerät (7) bereitstellt, wobei eine Proxy-Funktion (10) des Vermittlers (6) einen Zugriff des Endgerätes (7) über den Vermittler (6) auf die Benutzeroberfläche ermöglicht.

5. Verfahren nach einem der vorherigen Ansprüche, **dadurch gekennzeichnet, dass** das Endgerät (7) Nutzerdaten aus einer Eingabe am Endgerät (7) entgegennimmt und die Nutzerdaten mittels einer Proxy-Funktion (10) des Vermittlers (6) über den Vermittler (6) an die Kommunikationszentrale (8) übermittelt und dass die Kommunikationszentrale (8) mittels der Nutzerdaten prüft, ob der Nutzer authentisch ist, und den Nutzer nach erfolgreicher Prüfung autorisiert.

6. Verfahren nach einem der vorherigen Ansprüche, **dadurch gekennzeichnet, dass** der Vermittler (6) seine Kommunikation mit der Kommunikationszentrale (8) mit einem privaten Schlüssel, der am Vermittler (6) hinterlegt ist, verschlüsselt und dass die Kommunikationszentrale (8) mittels eines öffentlichen Schlüssels prüft, ob der Vermittler (6) authentisch ist, und den Vermittler (6) nach erfolgreicher Authentisierung an der Kommunikationszentrale (8) autorisiert.

7. Verfahren nach einem der vorherigen Ansprüche, **dadurch gekennzeichnet, dass** die Kommunikationszentrale (8) in einer Datenbank der Kommunikationszentrale (8) mehrere Nutzer und mehrere Vermittler (6) verwaltet und dass die Kommunikationszentrale (8) in Erwiderung auf vom Vermittler (6) erhaltene Lokalisationsinformationen bei erfolgreicher Autorisierung des Vermittlers (6) und erfolgreicher Autorisierung des Nutzers auf Basis der Lokalisationsinformationen den Aktivierungsserver (9) sucht, über den die Netzwerkkomponente (2), welcher die Lokalisationsinformationen zugeordnet sind, erreichbar ist, und in Erwiderung darauf vom gesuchten Aktivierungsserver (9) Konfigurationsinformationen erhält und an den mobilen Vermittler (6) zurück übermittelt.

8. Verfahren nach Anspruch 7, **dadurch gekennzeichnet, dass** die Kommunikationszentrale (8) die vom Aktivierungsserver (9) erhaltenen Konfigurationsinformationen kodiert und in der Bereitstellung einer Benutzeroberfläche in einer Antwort an den Vermittler (6) zurück übermittelt und weiter über dessen Proxy-Funktion (10) an das Endgerät (7) übermittelt und dass das Endgerät (7) eine Ausgabe mit den Konfigurationsinformationen erzeugt.

9. Verfahren nach einem der vorherigen Ansprüche, **dadurch gekennzeichnet, dass** die Kommunikationszentrale (8) mit allen ihr bekannten Aktivierungsservern (9) im Kommunikationsnetz kommuniziert und diese Aktivierungsserver (9) in einer Datenbank (14) der Kommunikationszentrale (8) verwaltet.

10. Verfahren nach einem der vorherigen Ansprüche, **dadurch gekennzeichnet, dass** die Kommunikationszentrale (8) den Aktivierungsserver (9), über den die Netzwerkkomponente (2) erreichbar ist, auf Basis der Lokalisationsinformationen, die der gesuchten Netzwerkkomponente (2) zugeordnet sind, sucht, indem die Kommunikationszentrale (8) einen Befehl zusammen mit den Lokalisationsinformationen zum Suchen von Netzwerkkomponenten (2) an alle ihr bekannten Aktivierungsserver (9) im Netz stellt, dass der gesuchte Aktivierungsserver (9) auf Basis der Lokalisationsinformationen erkennt, dass die den Lokalisationsinformationen zugeordnete Netzwerkkomponente (2) durch ihn erreichbar ist und in Erwiderung darauf mit einem Administrationszugriff auf die Netzwerkkomponente (2) zugreift und Konfigurationsinformationen von dieser Netzwerkkomponente (2) abfragt und die Konfigurationsinformationen an die Kommunikationszentrale (8) zurück übermittelt.

11. Verfahren nach Anspruch 10, **dadurch gekennzeichnet, dass** die Kommunikationszentrale (8) anhand der von der Netzwerkkomponente (2) abgefragten Konfigurationsinformationen eine Vorlage auswählt und einen Befehl zur Abfrage von spezifischen Konfigurationsinformationen zusammen mit der Vorlage an den Aktivierungsserver (9), über den die Netzwerkkomponente (2) erreichbar ist, übermittelt und dass der Aktivierungsserver (9) in Erwiderung darauf mit einem Administrationszugriff auf die Netzwerkkomponente (2) zugreift und spezifische Konfigurationsinformationen zur Schnittstelle (1) von dieser Netzwerkkomponente (2) abfragt und an die Kommunikationszentrale (8) zurück übermittelt.

12. Verfahren nach einem der vorherigen Ansprüche, **dadurch gekennzeichnet, dass** sich der Aktivierungsserver (9) mit einem privaten Schlüssel, der am Aktivierungsserver (9) hinterlegt ist, an der Kommunikationszentrale (8) autorisiert und dass die Kommunikationszentrale (8) nach erfolgreicher Autorisierung eine Verbindung zwischen dem Aktivierungsserver (9) und der Kommunikationszentrale (8) freigibt und nachfolgend versucht, diese Verbindung zwischen dem Aktivierungsserver (9) und der Kommunikationszentrale (8) aufrecht zu erhalten.

13. Verfahren zum Ermitteln und Verändern einer Konfiguration einer Schnittstelle (1), die Bestandteil einer Netzwerkkomponente (2) in einem Netzwerk ist, **dadurch gekennzeichnet,**
**dass** die Konfiguration der Schnittstelle (1) mit einem Verfahren zum Ermitteln einer Konfiguration einer Schnittstelle (1) nach einem der vorherigen Ansprüche ermittelt wird,
**dass** das Endgerät (7) eine Konfigurationsanfrage für eine zu konfigurierende Schnittstelle (1) über den Vermittler (6) und das Kommunikationsnetz an die Kommunikationszentrale (8) übermittelt,
**dass** die Kommunikationszentrale (8) einen Konfigurationswunsch für die gewünschte Konfiguration der Schnittstelle (1) am Endgerät (7) abfragt,
**dass** das Endgerät (7) den Konfigurationswunsch über den Vermittler (6), das Kommunikationsnetz und die Kommunikationszentrale (8) an den Aktivierungsserver (9) übermittelt und
**dass** der Aktivierungsserver (9) die Schnittstelle (1) an der Netzwerkkomponente (2) gemäß dem Konfigurationswunsch konfiguriert.

14. Verfahren nach Anspruch 13, **dadurch gekennzeichnet, dass** eine bereitgestellte Benutzeroberfläche an einem Browser auf dem Endgerät (7) die Konfigurationsanfrage entgegennimmt und an den Vermittler (6) übermittelt und dass eine Proxy-Funktion (10) des Vermittlers (6) die Konfigurationsanfrage an die Kommunikationszentrale (8) weiterleitet.

15. Verfahren nach einem der Ansprüche 13 und 14, **dadurch gekennzeichnet, dass** die Kommunikationszentrale (8) den Konfigurationswunsch am Endgerät (7) dadurch abfragt, dass die Kommunikationszentrale (8) eine Benutzeroberfläche zur Abfrage des Konfigurationswunsches erzeugt und über die Proxy-Funktion (10) des Vermittlers (6) die Benutzeroberfläche auf dem Endgerät (6) bereitstellt.

16. Verfahren nach einem der Ansprüche 13 bis 15, **dadurch gekennzeichnet, dass** die Kommunikationszentrale (8) in Erwiderung auf eine Konfigurationsanfrage eine Vorlage zur Abfrage des Konfigurationswunsches für die Schnittstelle (1) bereitstellt und dass die Kommunikationszentrale (8) den Konfigurationswunsch auf Basis dieser Vorlage am Endgerät (7) abfragt.

17. Verfahren nach einem der Ansprüche 13 bis 16, **dadurch gekennzeichnet, dass** die Kommunikationszentrale (8) in einer Datenbank der Kommunikationszentrale (8) mehrere Nutzer und mehrere Vermittler verwaltet, dass die Kommunikationszentrale (8) in Erwiderung auf einen von einem Nutzer an einen Vermittler (6) erhaltenen Konfigurationswunsch prüft, ob der Nutzer und der Vermittler (6) für einen dem Konfigurationswunsch zugeordneten Administrationszugriff auf die Netzwerkkomponente (2) autorisiert sind, dass die Kommunikationszentrale (8) genau in dem Fall, dass der Nutzer und der Vermittler (6) für diesen Administrationszugriff autorisiert sind, den Konfigurationswunsch an den zuständigen Aktivierungsserver (9) weiterleitet und dass der Aktivierungsserver (9) in Erwiderung auf den weitergeleiteten Konfigurationswunsch den zugeordneten Administrationszugriff auf die Netzwerkkomponente (2) vornimmt, wobei der Aktivierungsserver (9) mittels des Administrationszugriffs die Konfigurationseinstellungen der mit dem Vermittler (6) verbundenen Netzwerkkomponente (2) verändert.

18. Verfahren nach einem der Ansprüche 13 bis 17, **dadurch gekennzeichnet, dass** die Kommunikationszentrale (8) in einer Datenbank der Kommunikationszentrale (8) Vorlagen mit Konfigurationseinstellungen für Netzwerkkomponenten (2) verwaltet, dass die Kommunikationszentrale (8) in einem Zwischenspeicher die Konfigurationsinformationen zwischenspeichert, dass die Kommunikationszentrale (8) in Erwiderung auf einen vom Vermittler (6) erhaltenen Konfigurationswunsch eine Vorlage in Abhängigkeit vom Konfigurationswunsch und/oder in Abhängigkeit von den Konfigurationseinstellungen auswählt und mit Parametern, die jeweils dem Konfigurationswunsch zugeordnet sind, und Parametern, die den zwischengespeicherten Konfigurationseinstellungen zugeordnet sind, befüllt und dass die Kommunikationszentrale (8) den Konfigurationswunsch dadurch weiter an den Aktivierungsserver übermittelt, dass der Aktivierungsserver (9) einen Befehl zum Neubeschreiben der Schnittstelle (1) mit der Vorlage an den Aktivierungsserver (9) übermittelt.

19. System zum Ermitteln einer Konfiguration einer Schnittstelle, die Bestandteil einer Netzwerkkomponente (2) in einem Netzwerk ist, umfassend Mittel zur Ausführung des Verfahrens zum Ermitteln einer Konfiguration einer Schnittstelle (1) nach einem der Ansprüche 1 bis 12.

20. System zum Ermitteln und Verändern einer Konfiguration einer Schnittstelle (1), die Bestandteil einer Netzwerkkomponente (2) in einem Netzwerk ist, umfassend Mittel zur Ausführung des Verfahrens zum Ermitteln und Verändern einer Konfiguration einer Schnittstelle (1) nach einem der Ansprüche 13 bis 18.

## Claims

1. A method for determining a configuration of an interface (1) which is an integral part of a network component (2) in a network and to which any data flow for an administration access to the interface (1) takes place via at least one activation server (9),
a) wherein a wired data connection (4) is created between the interface (1) and an intermediary device (6) via an Ethernet interface of the intermediary device, wherein the intermediary device (6) has read-only access to the interface (1) of the network component (2) via the wired data connection,
b) wherein the intermediary device (6) reads out localization information assigned to the interface (1) of the network component (2) via the wired data connection (4),
c) wherein the localization information which is read out is transmitted by the intermediary device (6) via a mobile phone interface of said intermediary device (6) and at least partially by a mobile phone network of at least one communication network to a central communication system (8) arranged in the communication network and further via the central communication system (8) to the at least one activation server (9),
d) wherein each activation server (9) determines whether the network component (2), the interface whereof is assigned localization information transmitted to the respective activation server (9), can be reached by the activation server (9) in each case,
e) wherein the activation server (9) which has determined that the respective network component (2) can be reached by this activation server (9) accesses the network component (2) with an administration access and retrieves configuration information which is assigned to the network component (2) and the interface (1) from the network component (2), and
f) wherein the retrieved configuration information is transmitted starting from the network component (2) via the respective activation server (9), further via the central communication system (8) and the communication network and further via the intermediary device (6) to an end-user device (7) which is in contact with the intermediary device (6) by means of a radio connection and supplied by said end-user device (7) .

2. The method according to claim 1, **characterized in that** the intermediary device (6) is in contact with the end-user device (7) by means of a radio connection, wherein the end-user device (7) is a mobile end-user device.

3. The method according to one of the preceding claims, **characterized in that** the communication network is provided at least in part by the public Internet and that communication between the central communication system (8) and the intermediary device (6) takes place via a mobile phone interface of the intermediary device (6) and at least in part via a mobile phone network.

4. The method according to one of the preceding claims, **characterized in that** the central communication system (8) provides a user surface for inputs on the end-user device (7), wherein a proxy function (10) of the intermediary device (6) facilitates access by the end-user device (7) via the intermediary device (6) to the user surface.

5. The method according to one of the preceding claims, **characterized in that** the end-user device (7) receives user data from an entry on the end-user device (7) and transmits the user data by means of a proxy function (10) of the intermediary device (6) via said intermediary device (6) to the central communication system (8) and that the central communication system (8) checks whether the user is authentic by means of the user data and authorizes the user following a successful check.

6. The method according to one of the preceding claims, **characterized in that** the intermediary device (6) encrypts its communication with the central communication system (8) using a private key which is stored on the intermediary device (6) and the central communication system (8) checks by means of a public key whether the intermediary device (6) is authentic and authorizes said intermediary device (6) following successful authentication on the central communication system (8).

7. The method according to one of the preceding claims, **characterized in that** the central communication system (8) manages multiple users and multiple intermediary devices (6) in a database of the central communication system (8) and that the central communication system (8), in response to localization information received from the intermediary device (6) when said intermediary device (6) is successfully authorized and the user is successfully authorized based on the localization information, searches for the activation server (9) via which the network component (2) which is assigned the localization information can be reached and in response to this receives configuration information from the activation server (9) searched for and transmits it back to the mobile intermediary device (6).

8. The method according to claim 7, **characterized in that** the central communication system (8) encrypts the configuration information obtained from the activation server (9) and in supplying a user surface transmits it back in a reply to the intermediary device (6) and further via the proxy function (10) thereof to the end-user device (7) and that the end-user device (7) generates an output with the configuration information.

9. The method according to one of the preceding claims, **characterized in that** the central communication system (8) communicates with all its known activation servers (9) in the communication network and manages these servers (9) in a database (14) of the central communication system (8).

10. The method according to one of the preceding claims, **characterized in that** the central communication system (8) searches for the activation server (9) via which the network component (2) can be reached based on the localization information which is assigned to the network component (2) being searched for, **in that** the central communication system (8) sends a command along with the localization information for searching for network components (2) to all its known activation servers (9) in the network, that the activation server (9) being searched for recognizes based on localization information that the network component (2) assigned to the localization information can be reached by it and, in response to this, accesses the network component (2) with an administration access and retrieves configuration information from this network component (2) and conveys the configuration information back to the central communication system (8) .

11. The method according to claim 10, **characterized in that** the central communication system (8) selects a template with the help of the configuration information retrieved from the network component (2) and sends a command for the retrieval of specific configuration information along with the template to the activation server (9) via which the network component (2) can be reached, and that the activation server (9) accesses the network component (2) in response thereto with an administration access and retrieves specific configuration information on the interface (1) from this network component (2) and sends it back to the central communication system (8).

12. The method according to one of the preceding claims, **characterized in that** the activation server (9) is authorized at the central communication system (8) using a private key which is stored on the activation server (9) and that following successful authorization the central communication system (8) releases a connection between the activation server (9) and the central communication system (8) and subsequently attempts to maintain this connection between the activation server (9) and the central communication system (8).

13. The method for determining and modifying a configuration of an interface (1) which is an integral part of a network component (2) in a network,
**characterized in**
**that** the configuration of the interface (1) is determined using a method for determining a configuration of an interface (1) according to one of the preceding claims,
**that** the end-user device (7) sends a configuration query for an interface (1) which is to be configured via the intermediary device (6) and the communication network to the central communication system (8),
**that** the central communication system (8) retrieves a configuration request for the requested configuration of the interface (1) at the end-user device (7),
**that** the end-user device (7) sends the configuration request via the intermediary device (6), the communication network and the central communication system (8) to the activation server (9) and
**that** the activation server (9) configures the interface (1) at the network component (2) according to the configuration request.

14. The method according to claim 13, **characterized in that** a supplied user surface receives the configuration query at a browser on the end-user device (7) and sends it to the intermediary device (6) and that a proxy function (10) of the intermediary device (6) relays the configuration query to the central communication device (8).

15. The method according to one of claims 13 and 14, **characterized in that** the central communication system (8) retrieves the configuration request at the end-user device (7) **in that** the central communication system (8) produces a user surface for retrieving the configuration request and supplies the user surface on the end-user device (6) via the proxy function (10) of the intermediary device (6).

16. The method according to one of claims 13 to 15, **characterized in that** the central communication system (8) provides a format for retrieving the configuration request for the interface (1) in response to a configuration query and that the central communication system (8) retrieves the configuration request based on this template on the end-user device (7).

17. The method according to one of claims 13 to 16, **characterized in that** the central communication system (8) manages multiple users and multiple intermediary devices in a database of the central communication system (8), that the central communication system (8) checks in response to a configuration request received from a user to an intermediary device (6) whether the user and the intermediary device (6) are authorized for an administration access assigned to the configuration request to the network component (2), that the central communication system (8), precisely in the event that the user and the intermediary device (6) are authorized for this administration access, relays the configuration request to the competent activation server (9) and that the activation server (9), in response to the relayed configuration request, performs the assigned administration access to the network component (2), wherein the activation server (9) changes by means of the administration access the configuration settings of the network component (2) connected to the intermediary device (6).

18. The method according to one of claims 13 to 17, **characterized in that** the central communication system (8) manages templates with configuration settings for network components (2) in a database of the central communication system (8), that the central communication system (8) temporarily stores the configuration information in a buffer, that the central communication system (8) selects a template in response to a configuration request received from the intermediary device (6), depending on the configuration request and/or depending on the configuration settings, and fills it with parameters which are each assigned to the configuration request and parameters which are assigned to the temporarily stored configuration settings, and that the central communication system (8) relays the configuration request to the activation server **in that in that** said activation server (9) sends a command for the rewriting of the interface (1) with the template to the activation server (9).

19. A system for determining a configuration of an interface which is an integral part of a network component (2) in a network, comprising means for performing the method for determining a configuration of an interface (1) according to one of claims 1 to 12.

20. The system for determining and modifying a configuration of an interface (1) which is an integral part of a network component (2) in a network, comprising means for performing the method for determining and modifying a configuration of an interface (1) according to one of claims 13 to 18.

## Revendications

1. Procédé de détermination d'une configuration d'une interface (1), qui est une partie constituante d'un composant de réseau (2) dans un réseau et pour laquelle tout flux de données pour un accès d'administration a lieu sur l'interface (1) par le biais d'au moins un serveur d'activation (9),
a) sachant qu'une liaison de données (4) reliée par câble est établie entre l'interface (1) et un transmetteur (6) par le biais d'une interface Ethernet du transmetteur, sachant que le transmetteur (6) a accès exclusivement en lecture à l'interface (1) du composant de réseau (2) par le biais de la liaison de données reliée par câble,
b) sachant que le transmetteur (6) sélectionne par le biais de la liaison de données (4) reliée par câble des informations de localisation, qui sont attribuées à l'interface (1) du composant de réseau (2),
c) sachant que les informations de localisation sélectionnées sont transmises par le transmetteur (6) par le biais d'une interface radio mobile du transmetteur (6) et au moins en partie par un réseau radio mobile au moins d'un réseau de communication à une centrale de communication (8) disposée dans le réseau de communication et ultérieurement par le biais de la centrale de communication (8) à au moins un serveur d'activation (9),
d) sachant que chaque serveur d'activation (9) détermine, si le composant de réseau (2), à l'interface duquel les informations de localisation transmises au serveur d'activation (9) respectif sont attribuées, peut être atteint par le serveur d'activation (9) respectif,
e) sachant que le serveur d'activation (9), qui a déterminé que le composant de réseau (2) respectif peut être atteint par ce serveur d'activation (9), accède au composant de réseau (2) avec un accès d'administration et interroge par le composant de réseau (2) les informations de configuration, qui sont attribuées au composant de réseau (2) et à l'interface (1), et
f) sachant que les informations de configuration interrogées sont transmises en partant du composant de réseau (2) par le biais du serveur d'activation respectif (9), ultérieurement par le biais de la central de communication (8) et le réseau de communication et ultérieurement par le biais du transmetteur (6) à un terminal (7), lequel est en contact avec le transmetteur (6) au moyen d'une liaison radio et sont préparées par le terminal (7).

2. Procédé selon la revendication 1, **caractérisé en ce que** le transmetteur (6) est en contact avec le terminal (7) au moyen d'une liaison radio, sachant que le terminal (7) est un terminal mobile.

3. Procédé selon l'une quelconque des revendications précédentes, **caractérisé en ce que** le réseau de communication est préparé au moins en partie par l'Internet public et **en ce que** la communication entre la centrale de communication (8) et le transmetteur (6) a lieu par une interface radio mobile du transmetteur (6) et au moins en partie par un réseau radio mobile.

4. Procédé selon l'une quelconque des revendications précédentes, **caractérisé en ce que** la centrale de communication (8) prépare une interface d'utilisateur pour les entrées sur le terminal (7), sachant qu'une fonction de mandataire (proxy) (10) du transmetteur (6) permet un accès du terminal (7) par le biais du transmetteur (6) à l'interface d'utilisateur.

5. Procédé selon l'une quelconque des revendications précédentes, **caractérisé en ce que** le terminal (7) reçoit des données d'utilisateur d'une entrée sur le terminal (7) et les données d'utilisateur sont transmises au moyen d'une fonction de mandataire (proxy) (10) du transmetteur (6) par le biais du transmetteur (6) à la centrale de communication (8) et **en ce que** la centrale de communication (8) vérifie au moyen des données d'utilisateur, si l'utilisateur est authentique et autorise l'utilisateur après contrôle réussi.

6. Procédé selon l'une quelconque des revendications précédentes, **caractérisé en ce que** le transmetteur (6) codifie sa communication avec la centrale de communication (8) avec un code privé, qui est mémorisé sur le transmetteur (6) et **en ce que** la centrale de communication (8) vérifie au moyen d'un code public, si le transmetteur (6) est authentique et autorise le transmetteur (6) après authentification réussie sur la centrale de communication (8).

7. Procédé selon l'une quelconque des revendications précédentes, **caractérisé en ce que** la centrale de communication (8) gère dans une banque de données de la centrale de communication (8) plusieurs utilisateurs et plusieurs transmetteurs (6) et **en ce que** la centrale de communication (8) recherche en réponse aux informations de localisation reçues du transmetteur (6) en cas d'autorisation réussie du transmetteur (6) et d'autorisation réussie de l'utilisateur sur la base des informations de localisation, le serveur d'activation (9) par le biais duquel le composant de réseau (2), auquel sont attribuées les informations de localisation, peut être atteint et reçoit en réponse à cela les informations de configuration du serveur d'activation recherché (9) et retransmet au transmetteur mobile (6).

8. Procédé selon la revendication 7, **caractérisé en ce que** la centrale de communication (8) codifie les informations de configuration reçues du serveur d'activation (9) et retransmet dans une réponse au transmetteur (6) dans la préparation d'une interface d'utilisateur et transmet au terminal (7) ultérieurement par le biais de la fonction de mandataire (proxy) (10) de celui-ci et **en ce que** le terminal (7) produit une sortie avec les informations de configuration.

9. Procédé selon l'une quelconque des revendications précédentes, **caractérisé en ce que** la centrale de communication (8) communique avec tous ses serveurs d'activation (9) connus d'elle dans le réseau de communication et gère ces serveurs de communication (9) dans une banque de données (14) de la centrale de communication (8).

10. Procédé selon l'une quelconque des revendications précédentes, **caractérisé en ce que** la centrale de communication (8) recherche le serveur d'activation (9) par lequel le composant de réseau (2) peut être atteint, sur la base des informations de localisation, qui sont attribuées au composant de réseau recherché (2), la centrale de communication (8) mettant en réseau un ordre conjointement aux informations de localisation pour la recherche de composants de réseau (2) sur tous les serveurs d'activation (9) connus d'elle, **en ce que** le serveur d'activation (9) recherché identifie sur la base des informations de localisation, que le composant de réseau (2) attribué aux informations de localisation peut être atteint par lui et accède au composant de réseau (2) en réponse à cela avec un accès d'administration et interroge les informations de configuration de ce composant de réseau (2) et retransmet les informations de configuration à la centrale de communication (8).

11. Procédé selon la revendication 10, **caractérisé en ce que** la centrale de communication (8) sélectionne une présentation à l'aide des informations de configuration interrogées par le composant de réseau (2) et transmet un ordre d'interrogation des informations de configuration spécifiques conjointement à la présentation au serveur d'activation (9) par lequel le composant de réseau (2) peut être atteint et **en ce que** le serveur d'activation (9) accède en réponse à cela au composant de réseau (2) avec un accès d'administration et interroge les informations de configuration spécifiques pour l'interface (1) depuis ce composant de réseau (2) et retransmet à la centrale de communication (8).

12. Procédé selon l'une quelconque des revendications précédentes, **caractérisé en ce que** le serveur d'activation (9) est autorisé sur la centrale de communication (8) avec un code privé, qui est mémorisé sur le serveur d'activation (9) et **en ce que** la centrale de communication (8) autorise après autorisation réussie une liaison entre le serveur d'activation (9) et la centrale de communication (8) et essaie ensuite de conserver cette liaison entre le serveur d'activation (9) et la centrale de communication (8).

13. Procédé de détermination et de modification d'une configuration d'une interface (1), qui est partie intégrante d'un composant de réseau (2) dans un réseau,
**caractérisé**
**en ce que** la configuration de l'interface (1) est déterminée avec un procédé de détermination de configuration d'une interface (1) selon l'une quelconque des revendications précédentes,
**en ce que** le terminal (7) transmet une demande de configuration pour une interface (1) à configurer par le biais du transmetteur (6) et du réseau de communication à la centrale de communication (8),
**en ce que** la centrale de communication (8) interroge un souhait de configuration pour la configuration souhaitée de l'interface (1) sur le terminal (7),
**en ce que** le terminal (7) transmet le souhait de configuration par le transmetteur (6), le réseau de communication et la centrale de communication (8) au serveur d'activation (9), et
**en ce que** le serveur d'activation (9) configure l'interface (1) sur le composant de réseau (2) selon le souhait de configuration.

14. Procédé selon la revendication 13, **caractérisé en ce qu'**une interface d'utilisateur préparée reçoit la demande de configuration sur un navigateur sur le terminal (7) et transmet au transmetteur (6) et **en ce qu'**une fonction de mandataire (proxy) (10) du transmetteur (6) transmet ultérieurement la demande de configuration à la centrale de communication (8).

15. Procédé selon l'une quelconque des revendications 13 et 14, **caractérisé en ce que** la centrale de communication (8) interroge le souhait de configuration sur le terminal (7) par le fait que la centrale de communication (8) produit une interface d'utilisateur de demande de souhait de configuration et prépare par le biais de la fonction de mandataire (proxy) (10) du transmetteur (6) l'interface d'utilisateur sur le terminal (6).

16. Procédé selon l'une quelconque des revendications 13 à 15, **caractérisé en ce que** la centrale de communication (8) prépare en réponse à une demande de configuration une présentation de demande de souhait de configuration pour l'interface (1) et **en ce que** la centrale de communication (8) interroge le souhait de configuration sur la base de cette présentation sur le terminal (7).

17. Procédé selon l'une quelconque des revendications 13 à 16, **caractérisé en ce que** la centrale de communication (8) gère dans une banque de données de la centrale de communication (8) plusieurs utilisateurs et plusieurs transmetteurs, **en ce que** la centrale de communication (8) vérifie en réponse à un souhait de configuration reçu par un utilisateur sur un transmetteur (6), si l'utilisateur et le transmetteur (6) sont autorisés pour un accès d'administration attribué au souhait de configuration sur le composant de réseau (2), **en ce que** la centrale de communication (8) transmet le souhait de configuration au serveur d'activation compétent (9) exactement dans le cas où l'utilisateur et le transmetteur (6) sont autorisés pour cet accès d'administration et **en ce que** le serveur d'activation (9) procède en réponse au souhait de configuration transmis à l'accès d'administration attribué sur le composant de réseau (2), sachant que le serveur d'activation (9) modifie les positions de configuration du composant de réseau (2) relié au transmetteur (6) au moyen de l'accès d'administration.

18. Procédé selon l'une quelconque des revendications 13 à 17, **caractérisé en ce que** la centrale de communication (8) gère dans une banque de données de la centrale de communication (8) des présentations avec des positions de configuration pour des composants de réseau (2), **en ce que** la centrale de communication (8) mémorise provisoirement dans une mémoire provisoire les informations de configuration, **en ce que** la centrale de communication (8) sélectionne en réponse à un souhait de configuration reçu du transmetteur (6) une présentation en fonction du souhait de configuration et/ou en fonction des positions de configuration et remplit avec des paramètres, qui sont attribués respectivement au souhait de configuration et avec des paramètres qui sont attribués aux positions de configuration mémorisées provisoirement et **en ce que** la centrale de communication (8) transmet ultérieurement le souhait de configuration au serveur d'activation par le fait que le serveur d'activation (9) transmet un ordre de réécriture de l'interface (1) avec la présentation sur le serveur d'activation (9).

19. Système de détermination d'une configuration d'une interface, qui est partie constituante d'un composant de réseau (2) dans un réseau, comprenant des moyens d'exécution du procédé de détermination d'une configuration d'une interface (1) selon l'une quelconque des revendications 1 à 12.

20. Système de détermination et de modification d'une configuration d'une interface (1), qui est partie constituante d'un composant de réseau (2) dans un réseau, comprenant des moyens d'exécution du procédé de détermination et de modification d'une configuration d'une interface (1) selon l'une quelconque des revendications 13 à 18.
